# EUROPEAN PATENT SPECIFICATION

(11) **EP 4 004 641 B1**
(45) Date of publication and mention of the grant of the patent: **09.10.2024**
(21) Application number: 20757159.7
(22) Date of filing: 30.07.2020
(51) Int. Cl.: G02F 1/155, G02F 1/153

(54) **FASTER SWITCHING ELECTROCHROMIC DEVICES**
SCHNELLER SCHALTENDE ELEKTROCHROME VORRICHTUNGEN
DISPOSITIFS ÉLECTROCHROMES À COMMUTATION PLUS RAPIDE

(30) Priority: 31.07.2019 US 201962881144 P
(43) Date of publication of application: 01.06.2022
(73) Proprietor: View, Inc., Milpitas, CA 95035 (US)
(72) Inventor: ROZBICKI, Robert T., Milpitas, California 95035 (US); PRADHAN, Anshu A., Milpitas, California 95035 (US); KAILASAM, Sridhar Karthik, Milpitas, California 95035 (US); FRIEDMAN, Robin, Milpitas, California 95035 (US); JACK, Gordon E., Milpitas, California 95035 (US); GILLASPIE, Dane Thomas, Milpitas, California 95035 (US)
(74) Representative: Haseltine Lake Kempner LLP
(86) International application number: PCT/US2020/044337
(87) International publication number: WO 2021/022084

(56) References cited:
- US-A1- 2008 190 759
- US-A1- 2018 095 337
- US-A1- 2019 219 881

## Description

### CROSS-REFERENCES TO RELATED APPLICATIONS

This application claims benefit of and priority to U.S. Provisional application 62/881,144, filed on July 31, 2019 and titled "FASTER SWITCHING LOW-DEFECT ELECTROCHROMIC WINDOWS;".

### FIELD

The disclosure generally relates to electrochromic devices and in particular to material layers in electrochromic devices.

### BACKGROUND

Electrochromism is a phenomenon in which a material exhibits a reversible electrochemically-mediated change in an optical property when placed in a different electronic state, typically by being subjected to a voltage change. The optical property is typically one or more of color, transmittance, absorbance, and reflectance. Electrochromic materials may be incorporated into, for example, windows and mirrors. The color, transmittance, absorbance, and/or reflectance of such windows and mirrors may be changed by inducing a change in the electrochromic material. However, advances in electrochromic technology, apparatus, and related methods of making and/or using them, are needed because conventional electrochromic windows suffer from, for example, high defectivity and low versatility. US 2019/219881 A1, US 2018/095337 A1, US 2008/190759 A1 constitute prior art which can be regarded as useful for understanding the invention.

### SUMMARY

The invention is set out in the appended claims. Certain embodiments , not according to the claimed invention, pertain to electrochromic devices comprising first and second conductors, wherein at least one of the first and second conductors is a multi-layered conductor. The electrochromic devices further comprising an electrochromic stack between the conductors adjacent a substrate. The at least one multi-layer conductor comprises a metal layer sandwiched between a first non-metal layer and a second non-metal layer such that the metal layer does not contact the electrochromic stack.

Certain embodiments, not according to the claimed invention, pertain to an electrochromic device comprising first and second conductors and an electrochromic stack between the first and second conductors adjacent a substrate. At least one of the first and second conductors is a multi-layered conductor. The multi-layer conductor comprises a metal layer sandwiched between a first non-metal layer and a second non-metal layer such that the metal layer does not contact the electrochromic stack. In one embodiment, each of the first and second non-metal layers is a transparent conductive oxide layer or a second defect mitigating insulating layer. In one embodiment, the electrochromic device further comprises one or more additional metal layers, wherein each of the additional metal layers is sandwiched between the first non-metal layer and the second non-metal layer and optionally each of the first and second non-metal layers is a transparent conductive oxide layer or a second defect mitigating insulating layer or the first and second non-metal layers are additional defect mitigating insulating layers. In one embodiment, each of the first and second conductors is a multi-layered conductor comprising a metal layer. In one embodiment, the electrochromic device further comprises a diffusion barrier disposed on the substrate and optionally the diffusion barrier comprises one or more layers or the diffusion barrier is a tri-layer stack of SiO₂, SnO₂, and SiOₓ layers, wherein the SiO₂ layer has a thickness of between 20 nm and 30 nm, wherein the Sn02 layer has a thickness of between 20 nm and 30 nm, and wherein the SiOₓ layer has a thickness of between 2 nm and 10 nm and further optionally the one or more layers of the diffusion barrier comprise at least one of silicon dioxide, silicon oxide, tin oxide, and FTO. In some cases, an overall sheet resistance of the first and second conductors is less than 10 Ω/□, less than 5 Ω/□, or less than 5 Ω/□. In one case, a resistivity of one of the first and second conductors is the range of between 150Ω-cm and about 500Ω-cm. In some cases, a sheet resistance of the first and second conductors varies by less than 20%, 10%), or 5%. In some cases, a thickness of each of the first and second conductors varies by less than 10%, 5% or 2% from a nominal thickness. In one embodiment, the metal layer is transparent. Certain embodiments pertain to electrochromic devices comprising in the following order: a) a glass substrate, b) a first transparent conductive oxide (TCO) layer, c) a first defect mitigating insulating layer, d) a first metal layer, e) a second defect mitigating insulating layer, f) an electrochromic stack comprising a cathodically coloring electrode layer and an anodically coloring electrode layer sandwiching an ion conductor layer, g) a second TCO layer, h) a second metal layer, and i) a third TCO layer. In one embodiment, the glass substrate is float glass and there is a diffusion barrier between the glass substrate and the first TCO layer. In one embodiment, the first TCO layer is FTO. In one embodiment, the first and second metal layers are silver. In one embodiment, the second and third TCO layers are ITO. In one embodiment, the electrochromic device further comprises, in the following order: j) a third metal layer; and k) a fourth TCO layer, optionally wherein the third metal layer is silver and the fourth TCO layer is ITO.

Certain embodiments, not according to the claimed invention, pertain to an electrochromic device comprising, in the following order, a substantially transparent substrate, a first multi-layer conductor disposed on the substantially transparent substrate, an electrochromic stack, and a second multi-layer conductor disposed on the electrochromic stack. The first multi-layer conductor comprises, in order, a first conductive material layer, a first defect mitigating insulating layer, a second conductive material layer, and a second defect mitigating insulating layer. The second multi-layer conductor comprises, in order, a third defect mitigating insulating layer, a third conductive material layer, a fourth defect mitigating insulating layer, and a fourth conductive material layer. In one embodiment, the electrochromic device further comprises one or more diffusion barrier layers between the substantially transparent substrate and the first multi-layer conductor.

Certain embodiments, not according to the claimed invention, pertain to an electrochromic device comprising, in the following order, a substantially transparent substrate, a first multi-layer conductor disposed on the substantially transparent substrate, an electrochromic stack, and a second multi-layer conductor disposed on the electrochromic stack. The first multi-layer conductor comprises, in order, a first transparent conductive oxide layer, a first metal layer, a second transparent conductive oxide layer, and a first defect mitigating insulating layer. The second multi-layer conductor comprises, in order, a third transparent conductive oxide layer, a second metal layer, and a fourth transparent conductive oxide layer.

Certain embodiments, not according to the claimed invention, pertain to an electrochromic device comprising, in the following order, a substantially transparent substrate, a first multi-layer conductor disposed on the substantially transparent substrate, an electrochromic stack, and a second multi-layer conductor disposed on the electrochromic stack. The first multi-layer conductor comprises, in order, a first transparent conductive oxide layer, a first metal layer, a second transparent conductive oxide layer, one or more barrier/blocking layers, and a first defect mitigating insulating layer. The second multi-layer conductor comprises, in order, a third transparent conductive oxide layer, a second metal layer, and a fourth transparent conductive oxide layer. In one embodiment, the electrochromic device further comprises one or more diffusion barrier layers between the substantially transparent substrate and the first multi-layer conductor.

Certain embodiments, not according to the claimed invention, pertain to an electrochromic device comprising, in the following order a substantially transparent substrate, a first multi-layer conductor disposed on the substantially transparent substrate, an electrochromic stack, and a second multi-layer conductor disposed on the electrochromic stack. The first multi-layer conductor comprises, in order, a first transparent conductive oxide layer, a first metal layer, a protective cap layer, and a second transparent conductive oxide layer. The second multi-layer conductor comprises, in order, a third transparent conductive oxide layer, a second metal layer, and a fourth transparent conductive oxide layer.

Certain embodiments, not according to the claimed invention, pertain to an electrochromic device comprising, in the following order: a substantially transparent substrate, a first multi-layer conductor disposed on the substantially transparent substrate, an electrochromic stack, and a second multi-layer conductor disposed on the electrochromic stack. The first multi-layer conductor comprises, in order, one or more color tuning layers, a first metal layer, and a first defect mitigating insulating layer. The second multi-layer conductor comprises, in order, a second defect mitigating insulating layer and a second metal layer. In one embodiment, the electrochromic device further comprises one or more diffusion barrier layers between the substantially transparent substrate and the first multi-layer conductor. In one embodiment, the first metal layer becomes transparent when disposed over the one or more color tuning layers. In one embodiment, the one or more color tuning layers has wavelength absorption characteristics such that light transmitted through the electrochromic device is of a predetermined spectrum. In one embodiment, the one or more color tuning layers has wavelength absorption characteristics such that light transmitted through the electrochromic device is blue.

Certain aspects of the present disclosure pertain to windows that include one or more electrochromic devices described herein.

Certain embodiments, not according to the claimed invention, are directed to an electrochromic window configured for electromagnetic shielding (i.e. an electromagnetic-shielding, electrochromic window). In one embodiment, an electromagnetic-shielding, electrochromic window comprises a first multi-layer conductor disposed on a transparent substrate, an electrochromic stack disposed on the first conductor, and a second multi-layer conductor. One or both of the first and second multi-layer conductors comprises an electromagnetic shielding stack configured to be activated to block electromagnetic communication signals through the window. The electromagnetic shielding stack comprises a first electroconductive material layer (e.g. metal layer) sandwiched between a first anti-reflection layer (e.g., a TCO layer or a DMIL layer) and a second anti-reflection layer.

Certain implementations, not according to the claimed invention, pertain to anelectrochromic device including first and second conductors and a solid state and inorganic electrochromic stack between the first and second conductors adjacent a substrate. In these implementations, at least one of the first and second conductors is a multi-layer conductor comprising a metal layer sandwiched between a first transparent conductive oxide layer and a second transparent conductive oxide layer. In some cases, the electrochromic device further includes a diffusion barrier disposed on the substrate and/or one or more color tuning layers adjacent the metal layer.

Certain implementations, not according to the claimed invention, pertain to an electrochromic device including first and second conductors and a solid state and inorganic electrochromic stack between the first and second conductors adjacent a substrate. In these implementations, at least one of the first and second conductors is a multi-layer conductor having a metal layer sandwiched between a first transparent conductive oxide layer and a defect mitigating insulating layer. In some cases, the electrochromic device further includes a diffusion barrier disposed on the substrate and/or one or more color tuning layers adjacent the metal layer.

Certain implementations, not according to the claimed invention, pertain to an electrochromic device including first and second conductors and a solid state and inorganic electrochromic stack between the first and second conductors adjacent a substrate. In these implementations, at least one of the first and second conductors is a multi-layer conductor comprising a metal layer sandwiched between a first transparent conductive oxide layer and a blocking/barrier layer. In some cases, the electrochromic device further includes a diffusion barrier disposed on the substrate and/or one or more color tuning layers adjacent the metal layer.

Certain implementations, which are according to the claimed invention, pertain to an electrochromic device including a first conductor which is a single a first transparent conductive oxide layer, a second conductor comprising a metal layer sandwiched between a second transparent conductive oxide layer and a third transparent conductive oxide layer, and a solid state and inorganic electrochromic stack between the first and second conductors adjacent a substrate. In these implementations, a first sheet resistance of the first conductor approximately matches a second sheet resistance of the second conductor. According to the claimed invention, the electrochromic device further includes a diffusion barrier disposed on the substrate and optionally one or more color tuning layers adjacent the metal layer.

These and other features and embodiments will be described in more detail below with reference to the drawings.

### BRIEF DESCRIPTION OF THE FIGURES

**FIG.1** depicts a schematic illustration of a cross section of an electrochromic device, according to aspects.
**FIGS. 2A** and **2B** depict schematic illustrations of a cross section of an electrochromic device, according to certain aspects.
**FIG. 3** depicts a schematic illustration of a cross section of an electrochromic device including in order a substrate, a diffusion barrier, a first composite conductor with a first conductive (metal or TCO) material layer, a first DMIL, a second conductive (metal or TCO) material layer, and a second DMIL and a second composite conductor with mirrored layers to first composite conductor, according to embodiments.
**FIG. 4** depicts a schematic illustration of a cross section of an electrochromic device with a composite conductor having one or more color tuning layers, according to aspects.
**FIG. 5A** depicts a schematic illustration of a cross section of an electrochromic device with a composite conductor having a DMIL between a TCO/Metal/TCO stack and the electrochromic stack, according to aspects.
**FIG. 5B** depicts a schematic illustration of a cross section of an electrochromic device with a composite conductor having a DMIL between a TCO/Metal/TCO stack and the electrochromic stack, according to aspects.
**FIG. 6** depicts a schematic illustration of a cross section of an electrochromic device with one or more barrier/blocking layer, according to aspects.
**FIG. 7** depicts a schematic illustration of a cross section of an electrochromic device with a protective cap, according to aspects.
**FIG. 8** depicts a schematic illustration of a cross section of an electrochromic device with multi-layer conductors, according to embodiments.
**FIG. 9** depicts a schematic illustration of a flexible electromagnetic shielding film, according to embodiments.
**FIG. 10** depicts a schematic illustration of an electrochromic device with each of two conductors having an IMI stack, according to embodiments.
**FIG. 11** depicts a schematic illustration of an electrochromic device with a DMIL between a conductor and an electrochromic stack, according to embodiments.
**FIG. 12** depicts a schematic illustration of an electrochromic device having a first conductor made of a single transparent conductive layer and a second conductor having an IMI stack, according to embodiments.
**FIG. 13** depicts a schematic illustration of an electrochromic device having one or more barrier/blocking layers, according to embodiments.
**FIG. 14** depicts a schematic illustration of an electrochromic device having one or more barrier/blocking layers, according to embodiments.
**FIG. 15** depicts an example of operations in an electrochromic window assembly fabrication process, according to embodiments. Only the embodiments illustrated in fig. 11 and 12 are according to the claimed invention.

### DETAILED DESCRIPTION

Different aspects are described below with reference to the accompanying drawings. The features illustrated in the drawings may not be to scale. In the following description, numerous specific details are set forth in order to provide a thorough understanding of the presented embodiments. The disclosed embodiments may be practiced without one or more of these specific details. In other instances, well-known operations have not been described in detail to avoid unnecessarily obscuring the disclosed embodiments.

Certain aspects pertain to electrochromic devices configured not only for faster switching, but also for high quality low-defect count. In some cases, the electrochromic devices have multi-layer conductors of differing materials. The different conductor material layers are configured for faster switching relative to conventional single-layer conductors, while also being optically and materially compatible with the other device layers. In other aspects, electrochromic devices are configured with one or more barrier/blocking layer and/or one or more metal alloy layers to help prevent migration of the metal into the electrochromic device for improved durability. These and other aspects are described below.

### I. Electrochromic device structure

Before turning to a more detailed description on conductor designs and other improvements in layers of an electrochromic device, examples of the structure of an electrochromic device are provided. An electrochromic device generally includes two conductors that sandwich an electrochromic stack. The electrochromic stack typically includes an electrochromic (EC) layer, a counter electrode (CE) layer, and optionally one or more ion conducting (IC) layers that allow ion transport but are electrically insulating. Electrochromic devices are typically deposited on a substrate, and oftentimes are depicted as fabricated on a horizontally oriented substrate, and thus for the purposes of this disclosure, the conductors of the electrochromic device are sometimes referred to as "upper" and "lower" conductors where the description makes reference to drawings that depict the conductors in this manner. In other cases, the conductors are referred to as "first" and "second" conductors.

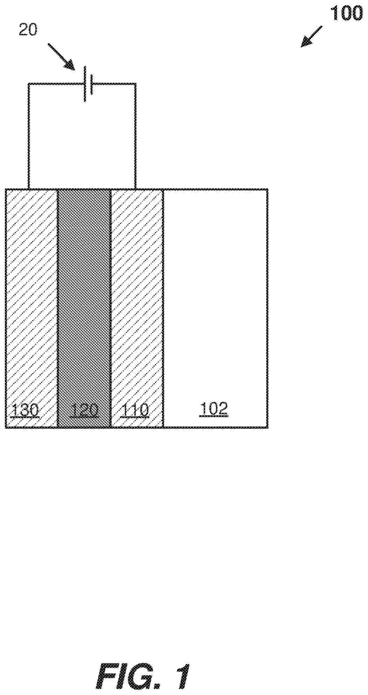

**FIG. 1** is a schematic illustration of a cross-section of an electrochromic device **100,** according to embodiments. The electrochromic device **100** includes a substrate **102** (e.g., glass), a first conductor **110,** an electrochromic stack **120,** and a second conductor **130.** A voltage source, **20,** operable to apply an electric potential across electrochromic stack **120** effects the transition of the electrochromic device **100** between tint states such as, for example, between a bleached state and a colored state. In certain implementations, the electrochromic device **100** further includes a diffusion barrier of one or more layers between the substrate **102** and the first conductor **110.** In some cases, the substrate **102** may be fabricated with the diffusion barrier.

In certain embodiments, the electrochromic stack is a three-layer stack including an EC layer, optional IC layer that allows ion transport but is electrically insulating, and a CE layer. The EC and CE layers sandwich the IC layer. Oftentimes, but not necessarily, the EC layer is tungsten oxide based and the CE layer is nickel oxide based, e.g., being cathodically and anodically coloring, respectively. In one embodiment, the electrochromic stack is between about 100 nm and about 500 nm thick. In another embodiment, the electrochromic stack is between about 410 nm and about 600 nm thick. For example, the electrochromic stack may include an electrochromic layer that is between about 200 nm and about 250 nm thick, an IC layer that is between about 10 and about 50 nm thick, and a CE layer that is between about 200 nm and 300 nm thick.

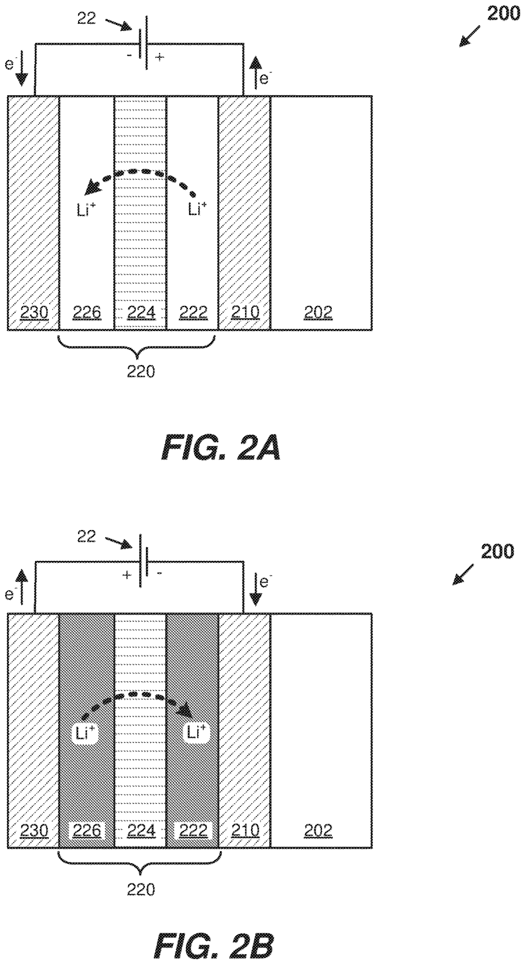

**FIGS. 2A** and **2B** are schematic cross-sections of an electrochromic device **200,** according to embodiments. The electrochromic device **200** includes a substrate **202,** a first conductor **210,** an electrochromic stack **220,** and a second conductor **230.** The electrochromic stack **220** includes an electrochromic layer (EC) **222,** an optional ion conducting (electronically resistive) layer (1C) **224,** and a counter electrode layer (CE) **226.** A voltage source **22** is operable to apply a voltage potential across the electrochromic stack **220** to effect transition of the electrochromic device between tint states such as, for example, between a bleached state (refer to **FIG. 2A**) and a colored state (refer to **FIG. 2B**). In certain implementations, the electrochromic device **200** further includes a diffusion barrier located between the substrate **202** and the first conductor **210.**

In certain implementations of the electrochromic device **200** of **FIGS. 2A** and **2B****,** the order of layers in the electrochromic stack **220** may be reversed with respect to the substrate **202** and/or the position of the first and second conductors may be switched. For example, in one implementation the layers may be in the following order: substrate **202,** second conductor **230,** CE layer **226,** optional IC layer **224,** EC layer **222,** and first conductor **210.**

In certain implementations, the CE layer may include a material that is electrochromic or not. If both the EC layer and the CE layer employ electrochromic materials, one of them is a cathodically coloring material and the other an anodically coloring material. For example, the EC layer may employ a cathodically coloring material and the CE layer may employ an anodically coloring material. This is the case when the EC layer is a tungsten oxide and the counter electrode layer is a nickel tungsten oxide. The nickel tungsten oxide may be doped with another metal such as tin, niobium or tantalum.

During an exemplary operation of an electrochromic device (e.g. electrochromic device **100** or electrochromic device **200),** the electrochromic device can reversibly cycle between a bleached state and a colored state. For simplicity, this operation is described in terms of the electrochromic device **200** shown in **FIGS. 2A** and **2B****,** but applies to other electrochromic devices described herein as well. As depicted in **FIG. 2A****,** in the bleached state, a voltage is applied by the voltage source **22** at the first conductor **210** and second conductor **230** to apply a voltage potential across the electrochromic stack **220,** which causes available ions (e.g. lithium ions) in the stack to reside primarily in the CE layer **226.** If the EC layer **222** contains a cathodically coloring material, the device is in a bleached state. In certain electrochromic devices, when loaded with the available ions, the CE layer can be thought of as an ion storage layer. Referring to **FIG. 2B****,** when the voltage potential across the electrochromic stack **220** is reversed, the ions are transported across optional IC layer **224** to the EC layer **222,** which causes the material to transition to the colored state. Again, this assumes that the optically reversible material in the electrochromic device is a cathodically coloring electrochromic material. In certain embodiments, the depletion of ions from the counter electrode material causes it to color also as depicted. In other words, the counter electrode material is anodically coloring electrochromic material. Thus, the EC layer **222** and the CE layer **226** combine to synergistically reduce the amount of light transmitted through the stack. When a reverse voltage is applied to the electrochromic device **200,** ions travel from the EC layer **222,** through the IC layer **224,** and back into the CE layer **226.** As a result, the electrochromic device **200** bleaches i.e. transitions to the bleached state. In certain implementations, electrochromic devices can operate to transition not only between bleached and colored states, but also to one or more intermediate tint states between the bleached and colored states.

Some pertinent examples of electrochromic devices are presented in the following US patent applications: U.S. Patent Application No. 12/645,111, filed on December 22, 2009; U.S. Patent Application No. 12/772,055, filed on April 30, 2010; U.S. Patent Application No. 12/645,159, filed on December 22, 2009; U.S. Patent Application No. 12/814,279, filed on June 11, 2010-, and U.S. Patent Application No. 13/462,725, filed on May 2, 2012.

Electrochromic devices described herein such as those described with reference to **FIGS. 1****,** **2A****,** **2B****,** **3****,** **4****,** **5A****,** **5B****,** **6****,** **7****,** and **8** can be incorporated, for example, in electrochromic windows. In these examples, the substrate is a transparent or substantially transparent substrate such as glass. For example, the substrate **102** or the substrate **202** may be architectural glass upon which electrochromic devices are fabricated. Architectural glass is glass that can be used as a building material. Architectural glass is typically used in commercial buildings, but may also be used in residential buildings, and typically, though not necessarily, separates an indoor environment from an outdoor environment. In certain embodiments, architectural glass is at least 20 inches by 20 inches. In some embodiments, architectural glass can be as large as about 72 inches by 120 inches.

As larger and larger substrates are used in electrochromic window applications, it becomes more desirable to reduce the number and extent of the defects in the electrochromic devices, otherwise performance and visual quality of the electrochromic windows may suffer. Certain embodiments described herein may reduce defectivity in electrochromic windows.

In some embodiments, one or more electrochromic devices are integrated into an insulating glass unit (IGU). An insulated glass unit includes multiple panes (also referred to as "lites") with a spacer sealed between panes to form a sealed interior region that is thermally insulating and can contain a gas such as an inert gas. In some embodiments, an IGU includes multiple electrochromic lites, each electrochromic lite having at least one electrochromic device disposed on a substantially transparent substrate. In other cases, an IGU includes one electrochromic lite with at least one electrochromic device disposed on a substantially transparent substrate. In one example, an IGU includes at least one lite that is of a laminate construction.

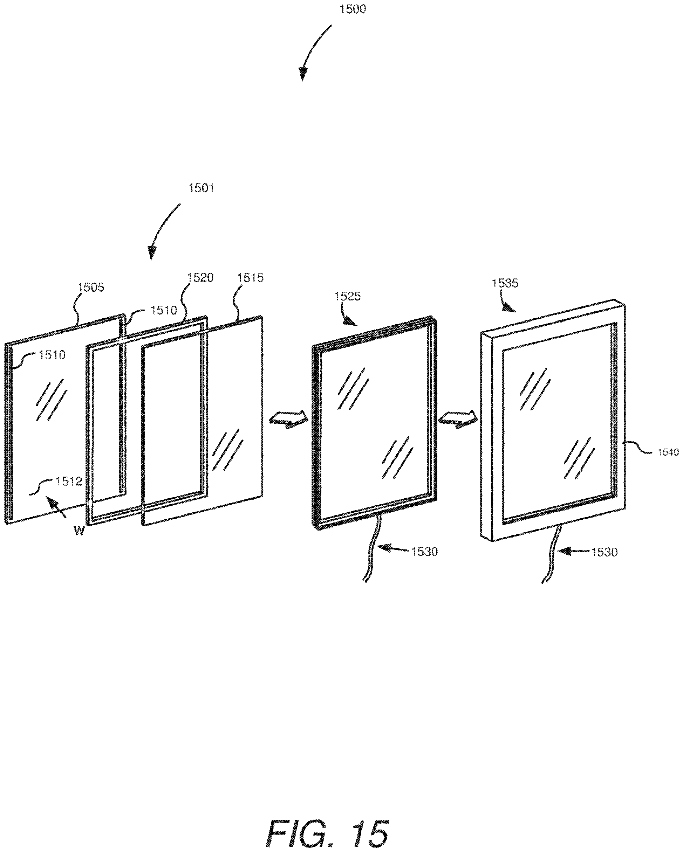

**FIG. 15** depicts an example of operations in an electrochromic window assembly fabrication process **1500,** according to embodiments. The fabrication process **1500** includes operations **1501** for fabricating an IGU **1525.** During the fabrication of the IGU **1525,** an electrochromic lite **1505** having an electrochromic device **1512** disposed on surface **W** and a pair of bus bars **1510,** which deliver power to the electrochromic device **1512,** is matched with another lite, **1515.** Alternatively, the electrochromic device **1512** may be disposed on the opposing surface to surface W or an electrochromic device may be disposed on both opposing surfaces.

During fabrication of the IGU **1525,** a spacer **1520** is sandwiched in between and registered with lites **1505** and **1515.** The IGU **1525** has an associated interior space defined by the faces of the lites in contact with the spacer **1520** and the interior surfaces of the spacer **1520.** The spacer **1520** is typically a sealing spacer, that is, it includes a spacer and sealing material between the spacer and each lite where they adjoin in order to hermetically seal the interior region and thus protect the interior region from moisture and the like. Once the lites **1505, 1515** are sealed to the spacer **1520,** a secondary sealing material may be applied around the perimeter edges of the IGU **1525** in order to impart not only further sealing from the ambient, but also further structural rigidity to the IGU **1525.** The IGU **1525** may be wired to a power supply and/or controller via wires, such as wires **1530.** The IGU **1525** is installed in and supported by a frame **1540** to form the electrochromic window assembly **1535.** The electrochromic window assembly **1535** may be separately connected to a controller (not shown). The controller may also be in electrical communication (wired and/or wirelessly) to one or more sensors in the IGU **1525,** the frame **1540,** and/or external to the electrochromic window assembly **1535,** e.g., via a communication network.

Typically, an IGU is formed by placing a primary sealing spacer, which may include a gasket or sealing material (e.g., PVB (polyvinyl butyral), PIB (polyisobutylene), or other suitable elastomer) and a rigid spacer around the perimeter of the glass sheet. The primary sealing spacer may also be referred to as a primary sealant. In the disclosed embodiments, the primary sealing spacer includes a metal spacer, or other rigid material spacer, and sealing material between the metal spacer and each glass lite. After the lites are joined to the primary sealing spacer, a secondary seal may be formed around the outer perimeter of the primary sealing spacer. The secondary seal may be, for example, a polymeric material that resists water and that adds structural support to the IGU. Typically, but not necessarily, a desiccant is included in the IGU frame or spacer during assembly to absorb any moisture and/or organic volatiles that may diffuse from the sealant materials. In some embodiments, the primary sealing spacer surrounds the bus bars and electrical leads to the bus bars extend through the seal. Typically, but not necessarily, the IGU is filled with an inert gas such as argon. The completed IGU can be installed in, for example, a frame or curtain wall and connected to a source of electricity and a controller to operate the electrochromic window assembly such as, e.g., by controlling tint states of the electrochromic device(s).

In certain embodiments, an electrochromic device is fabricated by thin film deposition methods such as, e.g., sputter deposition, chemical vapor deposition, pyrolytic spray on technology and the like, including combinations of thin film deposition technologies known to one of ordinary skill in the art. In one embodiment, the electrochromic device is fabricated using all plasma vapor deposition.

In certain embodiments, an electrochromic device may further comprise one or more bus bars for applying voltage to the conductors of the electrochromic device. The bus bars are in electrical communication with a voltage source. The bus bars are typically located at one or more edges of the electrochromic device and not in the center region, for example, the viewable central area of an IGU. In some cases, the bus bars are soldered or otherwise connected to the first and second conductors to apply a voltage potential across the electrochromic stack. For example, ultrasonic soldering, which makes a low resistance connection, may be used. Bus bars may be, for example, silver ink based materials and/or include other metal or conductive materials such as graphite and the like.

### II. Conductor and other electrochromic device materials

Recently, there has been increased attention paid to improving conductors for applications such as large-area electrochromic devices. Conventionally, single-layer conductors with transparent conductive oxides (TCOs) based on In₂O₃, ZnO, aluminum zinc oxide (AZO), fluorine tin oxide (FTO), indium tin oxide (ITO) have been used, but advanced and/or large-area electrochromic devices require new conductors with lower resistivities than previously achieved, e.g., for faster switching speeds. A TCO/metal/TCO three-layer structure can serve as an alternative since it may provide superior electrical characteristics to that of a conventional single-layer conductor and may have improved optical properties. However, improvements are still needed with regards to this structure. For example, incorporating a TCO/metal/TCO three-layer structure into advanced electrochromic devices introduces problematic issues such as addressing optical and material compatibility with other layers of the advanced electrochromic devices. Generally speaking, recent advancements in electrochromic device design have necessitated improvements in conductors compatible with these advanced designs. A TCO/metal/TCO stack is also referred to herein as an "IMI stack."

In some embodiments, electrochromic devices are configured not only for faster switching, but also to take into account the need for high quality, low-defect count electrochromic devices. In some cases, the electrochromic device conductors are configured for faster switching relative conventional single-layer TCO conductors, while also being optically and materially compatible with the other device layers.

The conductors described herein generally include one or more metal layers or one or more TCO layers, and in some embodiments, include both one or more metal layers and one or more TCO layers. The conductors having two or more layers of differing composition are sometimes referred to herein as "composite conductors" or "multi-layer conductors." In some cases, a composite conductor has two or more metal layers of differing composition. In other cases, a composite conductor has one or more metal layers and one or more TCO layers. In yet other cases, a composite conductor has two or more TCO layers. Generally, but not necessarily, the TCO materials used in conductors are high band gap metal oxides.

Some examples of TCO materials used in a TCO layer of a conductor include, but are not limited to, tin oxide (SnO), indium tin oxide (ITO), antimony tin oxide (ATO), fluorine tin oxide (FTO), aluminum zinc oxide (AZO), gallium zinc oxide (GZO), indium zinc oxide (IZO), zinc oxide (ZnO), boron zinc oxide (BZO), tungsten zinc oxide (WZO), tungsten tin oxide (WTO), niobium titanium oxide (NTiO), zinc indium tin oxide (ZITO), gallium indium tin oxide (GITO), and other metal oxides, doped with one or more dopants or not, for example.

According to one aspect, a TCO layer in a conductor has a thickness of less than 200 nm. According to one aspect, the thickness of a TCO layer in a conductor is between about 20 nm and about 50 nm. In some cases, the TCO layer is between about 200 nm and 500 nm thick. In some cases, the TCO layer is between about 100 nm and 500 nm thick. In some cases, the TCO layer is between about 10 nm and 100 nm thick. In some cases, the TCO layer is between about 10 nm and 50 nm thick. In some cases, the TCO layer is between about 200 nm and 500 nm thick. In some cases, the TCO layer is between about 100 nm and 250 nm thick.

Some examples of metals used in a metal layer of a conductor include, but are not limited to, silver, copper, aluminum, tungsten, gold, platinum, and mixtures, intermetallics and alloys thereof. According to one aspect, a metal layer or metal layers in a conductor have a thickness of less than about 20 nm. In one embodiment, the metal layer has a thickness in the range of between about 1 nm and 5 nm thick. In one embodiment, the metal layer has a thickness in the range between about 5 nm to about 30 nm. In one embodiment, the metal layer has a thickness in the range between about 10 nm and about 25 nm. In one embodiment, the metal layer has a thickness in the range between about 15 nm and about 25 nm.

In some embodiments, a metal layer of a conductor may be comprised of a "metal sandwich" construction of two or more different metal sublayers. For example, a metal layer may comprise a "metal sandwich" construction of Cu/Ag/Cu sublayers instead of a single layer of, for example, Cu. In another example, a metal layer may comprise a "metal sandwich" construction of NiCr/metal/NiCr, where the metal sublayer is one of the aforementioned metals.

In some embodiments, a metal layer of a conductor includes a metal alloy. Electromigration resistance of metals can be increased through alloying. Increasing the electromigration resistance of metal layers in a conductor reduces the tendency of the metal to migrate into the electrochromic stack and potentially interfere with operation of the device. By using a metal alloy, the migration of metal into the electrochromic stack can be slowed and/or reduced which can improve the durability of the electrochromic device. Certain aspects pertain to using a metal alloy in a metal layer of a conductor to help reduce the tendency of migration of the metal into the electrochromic stack and potentially improve the durability of the electrochromic device. For example, addition of small amounts of Cu or Pd to silver can substantially increase the electromigration resistance of the silver material. In one embodiment, for example, a silver alloy with Cu or Pd is used in a conductor to reduce the tendency of migration of silver into the electrochromic stack to slow down or prevent such migration from interfering with normal device operation. In some cases, the metal layer may be comprised of an alloy whose oxides have low resistivity. In one example, the metal layer may further comprise another material (e.g., Hg, Ge, Sn, Pb, As, Sb, or Bi) as compound during the preparation of the oxide to increase density and/or lower resistivity.

In some embodiments, the one or more metal layers of a composite conductor are transparent. Typically, a transparent metal layer is less than 10 nm thick, for example, about 5 nm thick or less. In other embodiments, the one or more metal layers of a composite conductor are opaque or not entirely transparent.

In certain embodiments, a composite conductor includes a layer of material of "opposing susceptibility" adjacent a dielectric or metal layer. A material of "opposing susceptibility," referring to the material's electric susceptibility, generally refers to a material that has susceptibility to having an opposing sign. Electric susceptibility of a material refers to its ability to polarize in an applied electric field. The greater the susceptibility, the greater the ability of the material to polarize in response to the electric field. Including a layer of "opposing susceptibility" can change the wavelength absorption characteristics to increase the transparency of the dielectric or metal layer and/or shift the wavelength transmitted through the combined layers. For example, a composite conductor can include a high-index dielectric material layer (e.g., TiO₂) of "opposing susceptibility" adjacent a metal layer to increase the transparency of the metal layer. In some cases, the added layer of opposing susceptibility" adjacent a metal layer can cause a not entirely transparent metal layer to be more transparent. For example, a metal layer (e.g., silver layer) that has a thickness in the range of from about 5 nm to about 30 nm, or between about 10 nm and about 25 nm, or between about 15 nm and about 25 nm, may not be entirely transparent by itself, but when coated with a material of "opposing susceptibility" (e.g., Ti02 layer on top of the silver layer), the transmission through the combined layers is higher than the metal or dielectric layer alone. Certain aspects pertain to selecting a dielectric or metal layer and an adjacent layer of "opposing susceptibility" to color tune the electrochromic device to transmit certain wavelengths of a predetermined spectrum.

In certain embodiments, a composite conductor includes one or more metal layers and one more "color tuning" layers also referred to as "index matching" layers. These color tuning layers are generally of a high-index, low-loss dielectric material of "opposing susceptibility" to the one or more metal layers. Some examples of materials that can be used in "color tuning" layers include silicon oxide, tin oxide, indium tin oxide, and the like. In these embodiments, the thickness and/or material used in the one or more color tuning layers changes the absorption characteristics to shift the wavelength transmitted through the combination of the material layers. For example, the thickness of the one or more color tuning layers can be selected to tune the color of light transmitted through the electrochromic device in a bleached state to a predetermined spectrum (e.g., more blue over green or red). In another example, tuning layers are chosen and configured to reduce transmission of certain wavelengths (e.g., yellow) through the electrochromic device, and thus e.g. a window which includes the device coating.

Although the first and second composite conductors generally have the same or substantially similar layers and the order of the layers in the first composite conductor mirrors the order of the layers of the second composite conductor in described implementations, the disclosure is not so limiting. For example, the first composite conductor may have different layers than the second composite conductor in other embodiments. As another example, the first composite conductor may have the same layers as the second composite conductor but the order of the layers may not mirror each other.

In certain embodiments, the first and second conductors have matched sheet resistance, for example, to provide optimum switching efficiency of the electrochromic device and/or a symmetric coloration front. Matched conductors have sheet resistances that vary from each other by no more than 20% in some embodiments, in other embodiments by no more than 10%, and in yet other embodiments by no more than 5%.

For large-area electrochromic devices, e.g., those devices disposed on architectural scale substrates, that is, substrates at least 20 × 20 inches and up to 72 × 120 inches, the overall sheet resistance of each of the multi-layer conductors (including all layers of the conductor such as metal, TCO, and DMIL, if present) is typically less than 15 Ω/□, less than 10 Ω/□, less than 5 Ω/□, less than 3 Ω/□, or less than 2 Ω/□. This allows for faster switching relative to conventional devices, particularly when the sheet resistance is less than 5 Ω/□, or less than 3 Ω/□, or less than 2 Ω/□. Resistivities of conductors described herein are typically measured in Ω-cm. In one example, the resistivity of one or more of the multi-layer conductors may be between about 150Ω-cm and about 500Ω-cm. One or more of the layers of a multi-layer conductor, such as a metal layer, may have a lower resistivity.

Ideally, at least the lower conductor's topography should be smooth for better conformal layers in the deposited stack thereon. In certain embodiments, one or both of the conductors is a substantially uniform conductor layer that varies by about ±10% in thickness in some cases, or about ±5% in thickness in some cases, or even about ±2% in thickness in some cases. Although typically the thickness of conductors is about 10-800 nm, the thickness will vary depending upon the materials used, thickness of individual layers and how many layers are in the conductor. For example, for composite conductors that include one or more TCOs, the TCO components can be between about 50 nm and about 500 nm thick while the conductor also includes one or more metal layers. In one example, the thickness of the metal layer(s) is in the range of between about 0.1 nm and about 5 nm thick. In one example, the thickness of the metal layer(s) is in the range of between about 1 nm and about 5 nm thick. In one example, the thickness of the metal layer(s) is in the range of about 5 nm to about 30 nm. In one example, the thickness of the metal layer(s) is in the range of between about 10 nm and about 25 nm. In one example, the thickness of the metal layer(s) is in the range of or between about 15 nm and about 25 nm.

In certain cases, the one or more metal layers of a conductor are fabricated sufficiently thin so as to be transparent in a transmissive electrochromic device. In other cases, a metal layer of a conductor is fabricated sufficiently thin to be almost transparent and then a material of "opposing susceptibility" is disposed adjacent the almost transparent metal to increase the transparency of the metal layer in transmissive electrochromic device. In cases with reflective devices, the one or more metal layers may have non-transparent metal layers without adding an adjacent layer of material of "opposing susceptibility."

Electrochromic devices described herein may include one or more defect mitigating insulating layers (DMILs) such as those described in U.S. Patent Application Serial No. 13/763,505, titled "DEFECT MITIGATION LAYERS IN ELECTROCHROMIC DEVICES" and filed on February, 8, 2013. 2. DMIL technology includes devices and methods employing the addition of at least one DMIL. A DMFL, prevents electronically conducting layers and/or electrochromically-active layers from contacting layers of the opposite polarity and creating a short circuit in regions where certain types of defects form. In some embodiments, a DMIL can encapsulate particles and prevent them from ejecting from the electrochromic stack and possibly cause a short circuit when subsequent layers are deposited. In certain embodiments, a DMIL has an electronic resistivity of between about 1 and 5×10¹⁰ Ohm-cm.

In some embodiments, the defect-mitigating insulating layer is a metal oxide, a metal nitride, a metal carbide, a metal oxynitride, or a metal oxycarbide. For example, the DMIL may be a metal oxide, e.g., a cerium oxide, a titanium oxide, an aluminum oxide, a zinc oxide, a tin oxide, a silicon aluminum oxide, a tungsten oxide, a nickel tungsten oxide, a tantalum oxide, or an oxidized indium tin oxide. As another example, the DMIL may be a metal nitride, e.g., a titanium nitride, an aluminum nitride, a silicon nitride, a tantalum nitride, or a tungsten nitride. Still further, the DMIL may be a metal carbide, e.g., a titanium carbide, an aluminum carbide, a silicon carbide, a tantalum carbide, or a tungsten carbide. In some devices, the DMIL contains a nitride, carbide, oxynitride, or oxycarbide such as nitride, carbide, oxynitride, or oxycarbide analogs of the listed oxides, e.g., silicon aluminum oxynitride. In some devices, the DMIL may also contain a mixture or other combination of oxide and nitride materials (e.g., a silicon oxynitride). In some devices, the DMIL contains two distinct electronically insulating materials. For example, the DMIL may include particles of a polishing compound. In one aspect, a DMIL is a TiOₓ layer.

The defect-mitigating insulating layer may be between about 5 nm and 500 nm in thickness. In various embodiments, the DMIL has an electronic resistivity of between about 1 ohm-cm and about 10¹⁵ ohm-cm. In certain embodiments, the defect-mitigating insulation layer is ionically conductive.

The general attributes of a DMIL include transparency in the visible range, weak or no electrochromism, electronic resistance comparable to or higher than that of undoped electrode material (electrochromic and/or counter electrode), and physical and chemical durability. In certain embodiments, the DMIL has a density of at most about 90% of the maximum theoretical density of the material from which it is fabricated.

As discussed above, one of the properties of a DMFL, is its particular electronic resistivity. Generally, a DMIL should have an electronic resistivity level that is substantially greater than that of the transparent conductive layer in the conductor, and in certain cases orders of magnitude greater. In some embodiments, the DMIL has an electronic resistivity that is intermediate between that of anion conducting layer and that of a transparent conductive layer (e.g., indium tin oxide). Thus, in these embodiments the electronic resistivity of the DMIL would be greater than about 10⁻⁴ Ω-cm (approximate resistivity of indium tin oxide) or greater than about 10⁻⁶ Ω-cm. In some cases, the DMIL has an electronic resistivity that is greater than about 10⁻⁴ Ω-cm (approximate resistivity of indium tin oxide). In some cases, the DMIL has an electronic resistivity that is greater than about 10⁻⁶ Ω-cm. In some cases, the DMIL has an electronic resistivity that is between about 10⁻⁴ Ω-cm and 10¹⁴ Ω-cm (approximate resistivity of certain examples of ion conductors for electrochromic devices). In some cases, the the DMIL has an electronic resistivity between about 10⁻⁵ Ω-cm and 10¹² Ω-cm. In certain embodiments, the electronic resistivity of the DMIL is between about 1 and 5×10¹³ Ω-cm. In certain embodiments, the electronic resistivity of the DMIL is between about 10² and 10¹² Ω-cm. In certain embodiments, the electronic resistivity of the DMIL is between about 10⁶ and 5×10¹² Ω-cm. In certain embodiments, the electronic resistivity of the DMIL is between about 10⁷ and 5×10⁹ Ω-cm. In some embodiments, the DMIL has an electronic resistivity that is comparable (e.g., within an order of magnitude) of that of the electrochromic layer or the counter electrode layer of the electrochromic stack. DMILs are designed within specified resistivity ranges while blocking/barrier layers are not limited to those resistivity ranges, e.g. a blocking/barrier layer may be highly electrically conductive, or not, while a DMIL has the specified electrical resistivity.

The electronic resistivity is coupled to the thickness of the DMIL. This resistivity and thickness level will together yield a sheet resistance value which may in fact be more important than simply the resistivity of the material alone (a thicker material will have a lower sheet resistance). When using a material having a relatively high resistivity value, the electrochromic device may be designed with a relatively thin DMIL, which may be desirable to maintain the optical quality of the device. In certain embodiments, the DMIL has a thickness of about 100 nm or less or about 50 nm or less. In one example, the DMFL, has a thickness of about 5 nm, in another example, the layer has a thickness of about 20 nm, and in another example, the layer has a thickness of about 40 nm. In certain embodiments, the DMIL has a thickness of between about 10 nm and about 100 nm. In one case, a DMIL is about 50 nm thick. In certain embodiments, the electronic sheet resistance of the DMIL is between about 40 and 4000 Ω per square or between about 100 and 1000 Ω per square. In some cases, the insulating material is electrically semiconducting having a sheet resistance that cannot be easily measured.

In certain embodiments, particularly those in which a DMIL is disposed on the substrate, a thicker layer of a DMIL is sometimes employed. The thickness of the DMIL may be, for example, between about 5 and 500 nm, between about 5 and 100 nm, between 10 and 100 nm, between about 15 and 50 nm, between about 20 and 50 nm, or between about 20 and 40 nm.

In certain embodiments, the material making up the DMIL has a relatively low charge capacity. In the context of an electrochromic device, a material's charge capacity represents its ability to reversibly accommodate lithium ions during normal electrochromic cycling. Charge capacity is the capacity of the material to irreversibly accommodate lithium ions that it encounters during fabrication or during initial cycling. Those lithium ions that are accommodated as charge are not available for subsequent cycling in and out of the material in which they are sequestered. If the insulating material of the DMIL has a high charge capacity, then it may serve as a reservoir of nonfunctional lithium ions (typically the layer does not exhibit electrochromism so the lithium ions that pass into it do not drive a coloring or bleaching transition). Therefore, the presence of this additional layer requires additional lithium ions to be provided in the device simply to be taken up by this additional layer. This is of course a disadvantage, as lithium can be difficult to integrate into the device during fabrication. In certain embodiments, the charge capacity of the DMIL is between about 10 and 100 milliCoulomb/cm²_{*}um. In one example, the charge capacity of the DMIL is between about 30 and 60 milliCoulomb/cm². For comparison, the charge capacity of a typical nickel tungsten oxide electrochromic layer is approximately 120 milliCoulomb/cm²_{*}um. In certain embodiments, the charge capacity of a DMIL is between about 30 and 100 milliCoulomb/cm²_{*}um. In one example, the charge capacity of the DMIL is between about 100 and 110 milliCoulomb/cm²_{*}um. For comparison, the charge capacity of a typical nickel tungsten oxide electrochromic layer is typically less than about 100 milliCoulomb/cm²_{*}um.

In certain embodiments, the DMIL is ionically conductive. This is particularly the case if the layer is deposited before the counter electrode layer. In some of these embodiments, the DMIL has an ionic conductivity of between about 10⁻⁷ Siemens/cm and 10⁻¹² Siemeiis/cm. In other of these embodiments, the DMIL has an ionic conductivity of between about 10⁻⁸ Siemens/cm and 10⁻¹¹ Siemens/cm. In other of these embodiments, the DMIL has an ionic conductivity of between about between 10⁻⁹ Siemens/cm and 10⁻¹⁰ Siemens/cm.

In some implementations, the DMIL exhibits little or no electrochromism during normal operation. Electrochromism may be measured by applying a defined voltage change or other driving force and measuring the change in optical density or transmissivity of the device.

According to certain implementations, the material of the DMIL should have favorable optical properties. For example, the material of the DMIL should have a relatively low optical density such as, for example, an optical density below about 0.1 or an optical density below about 0.05. Additionally in certain cases, the material of the DMIL has a refractive index that matches that of adjacent materials in the stack so that it does not introduce significant reflection. The material should also adhere well to other materials adjacent to it in the electrochromic stack.

As discussed above, a DMIL can serve to encapsulate particles that deposit on the device during fabrication in certain embodiments. By encapsulating these particles, they are less likely to eject and potentially cause defects. In certain implementations, the fabrication operation that deposits the DMIL is performed immediately after or soon after the process operation or operations that likely introduces particles into the device. These implementations may be useful to improve encapsulating the particles and reduce defectivity in electrochromic devices. In certain implementations, thicker layers of DMILs are used. Using thicker DMILs may be particularly useful to increase encapsulating of particles and reduce defectivity in electrochromic devices.

Various insulating materials may be used in DMILs. Some of these insulating materials include various transparent metal oxides such as, for example, aluminum oxide, zinc oxide, tin oxide, silicon aluminum oxide, silicon oxide, cerium oxide, stoichiometric tungsten oxide (e.g., WO₃, wherein the ratio of oxygen to tungsten is exactly 3), variations of nickel tungsten oxide, and highly oxidized indium tin oxide (ITO). In some cases, the insulating material of the DMIL is selected from aluminum oxide, zinc oxide, silicon aluminum oxide, tantalum oxide, and nickel tungsten oxide (typically a non-electrochromic type). In addition, some nitrides, carbides, oxynitrides, oxycarbides, and fluorides having medium to high resistance and optical transparency can be used. For example, nitrides such as titanium nitride, tantalum nitride, aluminum nitride, silicon nitride, and/or tungsten nitride may be used. Further, carbides such as titanium carbide, aluminum carbide, tantalum carbide, silicon carbide, and/or tungsten carbide may be used. Oxycarbides and/or oxynitrides may also be used in certain embodiments. Unless otherwise specified, each of these compositions may be present in various stoichiometries or ratios of elements. For DMILs containing nickel and tungsten, the ratio of nickel to tungsten may be controlled such that relatively high ratios are employed. For example the Ni:W (atomic) ratio may be between about 90: 10 and 50:50 or between about 80:20 and 60:40.

In some cases, the material chosen for the DMIL is a material that integrates well (i.e. compatible) with electrochromic stack. The integration may be promoted by (a) employing compositions similar to those of materials in layers adjacent to DMIL in the stack (promotes case of fabrication), and (b) employing materials that are optically compatible with the other materials in the stack and reduce quality degradation in the overall stack.

According to the claimed invention, the electrochromic device includes a diffusion barrier between the lower conductor and the transparent substrate (e.g., a glass substrate such as soda lime glass). The diffusion barrier may include one or more layers. The diffusion barrier layer or layers keep sodium ions from diffusing into the electrochromic device layers above it and may also, optionally, be optically tuned to enhance various optical properties of the entire construct, e.g., % optical transmission (%T), haze, color, reflection and the like.

In one embodiment, the diffusion barrier includes one or more layers including one more of, for example, silicon dioxide, silicon oxide, tin oxide, FTO and the like. In certain aspects, the diffusion barrier is a three-layer stack of SiO₂, SnO₂, and SiOₓ, wherein the SiO₂ layer has a thickness in the range of between 20 nm and 30 nm, the a SnO₂ layer has a thickness in the range of between 20 and 30 nm, and the SiOₓ layer has a thickness in the range of 2nm to 10 nm. In one aspect, the SiOₓ layer of the tri-layer diffusion barrier is a monoxide or a mix of the monoxide with SiO₂. In one aspect, the tri-layer diffusion barrier may be sandwiched between an FTO and the substrate. In certain aspects, the diffusion barrier is in a bi-layer or tri-layer construction of SnO₂, SiO₂ and SiOₓ in various combinations. In one embodiment, thicknesses of individual diffusion barrier layers may be in the range between about 10 nm and 30 nm. In certain cases, thicknesses of individual diffusion barrier layers may be in the range of 20 nm - 30 nm. In some cases, the diffusion barrier may be a sodium diffusion barrier and/or an anti-reflection or anti-iridescent layer.

According to the claimed invention, the electrochromic device has a diffusion barrier between the lower conductor and the substrate. In other implementations, not according to the claimed invention, the electrochromic device does not have a diffusion barrier: a a diffusion barrier may not be necessary and is not used. For example, if the substrate is a sodium free substrate such as plastic or alkali free glass, the diffusion barrier is optional. In other examples, an electrochromic device may have one or more color tuning layers over the substrate that function as a diffusion barrier.

In certain implementations, the substrate upon which the electrochromic device is disposed is made of a glass material and especially an architectural glass or other shatter-resistant glass material such as, for example, a silicon oxide (SOₓ)-based glass material. As a more specific example, a substrate can be a soda-lime glass substrate or float glass substrate. Such glass substrates can be composed of, for example, approximately 75% silica (SiO₂) as well as Na₂O, CaO, and several minor additives. However, the substrate can be formed of any material having suitable optical, electrical, thermal, and mechanical properties. For example, other suitable substrates can include other glass materials as well as plastic, semi-plastic and thermoplastic materials (for example, poly(methyl methacrylate), polystyrene, polycarbonate, allyl diglycol carbonate, SAN (styrene acrylonitrile copolymer), poly(4-methyl-1-pentene), polyester, polyamide), or mirror materials. In some implementations, the substrate may be strengthened, for example, by tempering, heating, chemically strengthening, or lamination with another substrate.

### III. Composite Conductors Examples

This section includes examples of electrochromic devices having one or more composite conductors, according to embodiments. In certain implementations, the electrochromic stacks and other layers of the electrochromic devices described in this section may have similar characteristics to layers described in the sections above. For example, the layers of the electrochromic stacks described in this section and in other sections may be similar in some respects to the layers described with reference to **FIGS. 2A and 2B** in Section 1. As another example, the characteristics of the DMILs described in this section are described in detail in Section II.

### - Conductive material/DMIL1/Conductive material/DMIL2

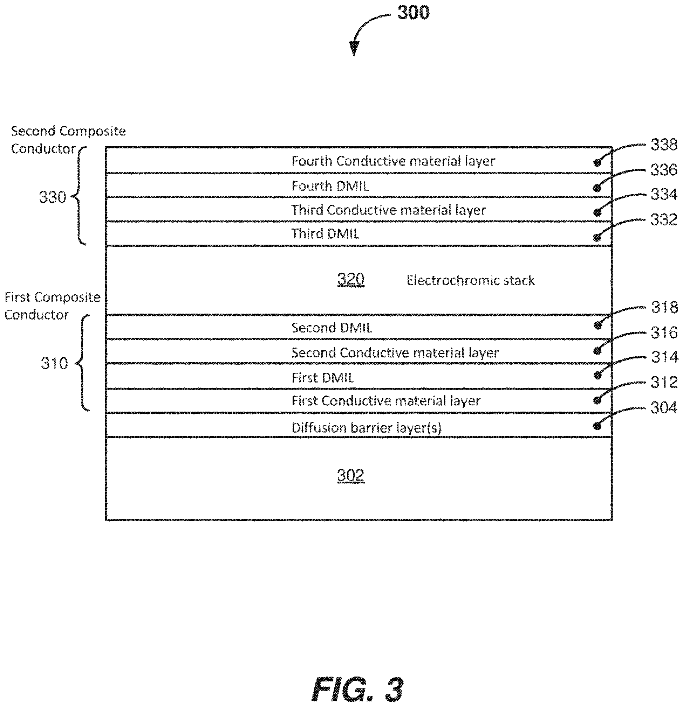

In certain embodiments, a composite conductor includes material layers with the order of: a first conductive material layer, a first DMIL adjacent the first conductive material layer, a second conductive material layer adjacent the first DMIL, and a second DMIL adjacent the second conductive material layer. In these embodiments, the first conductive material layer is a metal layer or a TCO layer and the second conductive material layer is a metal layer or a TCO layer. In certain examples, both the first and second conductive material layers are metal layers. In other examples, both the first and second conductive material layers are a TCO layers. In other examples, the first or second conductive material layer is a TCO layer and the other conductive material layer is a metal layer. An example of a composite conductor with material layers, in order, of: a first conductive material layer, a first DMIL, a second conductive material layer, and a second DMIL is shown in **FIG. 3****.**

**FIG. 3** depicts a schematic illustration of the material layers of an electrochromic device **300**, according to embodiments which are not according to the claimed invention. The electrochromic device **300** includes a substrate **302**, one or more diffusion barrier layers **304** disposed on the substrate **302,** a first composite conductor **310** disposed on the diffusion barrier layer(s) **304**, an electrochromic stack **320** disposed on the first composite conductor **310,** and a second composite conductor **330** disposed on the electrochromic stack **320.** The first composite conductor **310** includes a first conductive material layer **312,** a first DMIL **314**, a second conductive material layer **316,** and a second DMIL **318.** The second composite conductor **330** includes a third DMIL **314,** a third conductive material layer **334**, a fourth DMIL **336**, and a fourth conductive material layer **338.** The first conductive material layer **312** and the fourth conductive material layer **338** are either a metal layer or a TCO layer. The second conductive material layer **316** and the third conductive material layer **334** are either a metal layer or a TCO layer. In one example, the first conductive material layer **312** is a TCO layer and the second conductive material layer **316** is a metal layer. In another example, the first conductive material layer **312** is a metal layer and the second conductive material layer **316** is a TCO layer. In another example, both the first conductive material layer **312** and the second conductive material layer **316** are made of metal. In another example, both the first conductive material layer **312** and the second conductive material layer **316** are made of a TCO.

If the first conductive material layer **312** is made of a TCO, then the layer is made of any of the materials described above for TCOs and has the associated electrical, physical and optical properties of the TCO materials as described above. If the first conductive material layer **312** is made of a metal, then the layer may be made of any of the metal materials as described above for metal layers, including alloys, intermetallics, mixtures and/or layers of metals, and having the electrical, physical and optical properties of the metals as described above. In one embodiment where the first conductive material layer **312** is made of a metal, the thickness is between about 1 nm and 5 nm thick. In one embodiment where the first conductive material layer **312** is made of a metal, the thickness is between about 5 nm to about 30 nm. In one embodiment where the first conductive material layer **312** is made of a metal, the thickness is between about 10 nm and about 25 nm. In one embodiment where the first conductive material layer **312** is made of a metal, the thickness is between about 15 nm and about 25 nm. In one embodiment, the first conductive material layer **312** is made of a silver metal. The first DMIL **314** may be made of any of the materials described above for DMILs and has the associated electrical, physical and optical properties of the DMIL materials as described above. In one embodiment, the first DMIL **314** is of TiO₂. In one case, the first DMIL **314** of TiO₂ is between 10 nm and 100 nm thick. In another case, the first DMIL **314** of TiO₂ is between 25 nm and 75 nm thick. In another case, the first DMIL **314** of TiO₂ is between 40 nm and 60 nm thick. In yet another case, the first DMIL, **314** of TiO₂ is about 50 nm thick.

If the second conductive material layer **316** is made of a TCO, then the layer is made of any of the materials described above for TCOs and has the associated electrical, physical and optical properties of the TCO materials as described above. If the second conductive material layer **316** is made of a metal, then the layer may be made of any of the metal materials as described above for metal layers, including alloys, intermetallics, mixtures and/or layers of metals, and having the electrical, physical and optical properties of the metals as described above. In one embodiment where the second conductive material layer **316** is made of a metal, the thickness is between about 1 nm and 5 nm thick. In one embodiment where the second conductive material layer **316** is made of a metal, the thickness is between about 5 nm to about 30 nm. In one embodiment where the second conductive material layer **316** is made of a metal, the thickness is between about 10 nm and about 25 nm. In one embodiment where the second conductive material layer **316** is made of a metal, the thickness is between about 15 nm and about 25 nm. In one embodiment, the second conductive material layer **316** is made of a silver metal.

The second 13M IL **318** may be made of any of the materials described above for DMILs and has the associated electrical, physical and optical properties of the DMIL materials as described above. In one embodiment, the second DMIL **318** is of TiO₂. In one case, the second DMIL **318** of TiO₂ is between 10 nm and 100 nm thick. In another case, the second DMIL **318** of TiO₂ is between 25 nm and 75 nm thick. In another case, the second DMIL **318** of TiO₂ is between 40 nm and 60 nm thick. In yet another case, the second DMIL **318** of TiO₂ is about 50 nm thick.

The third DMIL **314** may be made of any of the materials described above for DMILs and has the associated electrical, physical and optical properties of the DMIL materials as described above. In one embodiment, the third DMIL **314** is of TiO₂. In one case, the third DMIL**314** of TiO₂ is between 10 nm and 100 nm thick. In another case, the third DMIL **314** of TiO₂ is between 25 nm and 75 nm thick. In another case, the third DMIL **314** of TiO₂ is between 40 nm and 60 nm thick. In yet another case, the third DMIL **314** of TiO₂ is about 50 nm thick.

The fourth DMIL **336** may be made of any of the materials described above for DMILs and has the associated electrical, physical and optical properties of the DMIL materials as described above. In one embodiment, fourth 13M IL **336** is of TiO₂. In one case, fourth DMIL **336** of TiO₂ is between 10 nm and 100 nm thick. In another case, the fourth DMIL **336** of TiO₂ is between 25 nm and 75 nm thick. In another case, the fourth DMIL **336** of TiO₂ is between 40 nm and 60 nm thick. In yet another case, the fourth DMIL **336** of TiO₂ is about 50 nm thick.

If the third conductive material layer **334** is made of a TCO, then the layer is made of any of the materials described above for TCOs and has the associated electrical, physical and optical properties of the TCO materials as described above. If the third conductive material layer **334** is made of a metal, then the layer may be made of any of the metal materials as described above for metal layers, including alloys, intermetallics, mixtures and/or layers of metals, and having the electrical, physical and optical properties of the metals as described above. In one embodiment where the third conductive material layer **334** is made of a metal, the thickness is between about 1 nm and 5 nm thick. In one embodiment where the third conductive material layer **334** is made of a metal, the thickness is between about 5 nm to about 30 nm. In one embodiment where the third conductive material layer **334** is made of a metal, the thickness is between about 10 nm and about 25 nm. In one embodiment where the third conductive material layer **334** is made of a metal, the thickness is between about 15 nm and about 25 nm. In one embodiment, the third conductive material layer **334** is made of a silver metal.

If the fourth conductive material layer **338** is made of a TCO, then the layer is made of any of the materials described above for TCOs and has the associated electrical, physical and optical properties of the TCO materials as described above. If the fourth conductive material layer **338** is made of a metal, then the layer may be made of any of the metal materials as described above for metal layers, including alloys, intermetallics, mixtures and/or layers of metals, and having the electrical, physical and optical properties of the metals as described above. In one case, the fourth conductive material layer **338** is silver and is between about 1 nm and 5 nm thick. In one embodiment where the fourth conductive material layer **338** is made of a metal, the thickness is between about 1 nm and 5 nm thick. In one embodiment where the fourth conductive material layer **338** is made of a metal, the thickness is between about 5 nm to about 30 nm. In one embodiment where the fourth conductive material layer **338** is made of a metal, the thickness is between about 10 nm and about 25 nm. In one embodiment where the fourth conductive material layer **338** is made of a metal, the thickness is between about 15 nm and about 25 nm. In one embodiment, the fourth conductive material layer **338** is made of a silver metal.

In the illustrated embodiment, the first and second composite conductors **310** and **330** have the same or substantially similar material layers as each other with a mirrored layout. That is, the third DMIL, **332** is the same or substantially similar to the second DMIL **318,** the fourth DMIL **336** is the same or substantially similar to the first DMIL **314,** the first conductive material layer **312** is the same or substantially similar to the fourth conductive material layer **338,** and the second conductive material layer **316** is the same or substantially similar to the third conductive material layer **334.** In other embodiments, the first and second composite conductors **310** and **330** may have different orders of the same layers. In yet other embodiments, the first and second composite conductors **310** and **330** have different material layers. Although the electrochromic device **300** is shown in with diffusion barrier layer(s) **304,** another embodiment omits it.

In certain aspects, the first composite conductor **310** of the electrochromic device **300** shown in **FIG. 3** further includes one or more color tuning layers located between the substrate **302** and the first conductive material layer **312.** In these aspects, the first conductive material layer **312** is made of metal. In some of these aspects, the color tuning layer(s) is substituted for the diffusion barrier **304.** In these color tuning embodiments, the one or more color tuning layers may be selected to increase transparency of the conductor and/or to modify the wavelength of light passing through the electrochromic device to change the color of light transmitted. Some examples of materials that can be used in color tuning layers are silicon oxide, tin oxide, indium tin oxide, and the like.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first composite conductor **310** in **FIG. 3****.** In another implementation, the first conductor and the second conductor have the construct of the second composite conductor **330** in **FIG. 3****.** In another implementation, the first conductor has the construct of the second composite conductor **330** in **FIG. 3** and the second conductor have the construct of the first composite conductor **310** in **FIG. 3****.** Alternatively, the order of the layers in each of the conductors in any of these implementations may be reversed.

### - Various Layers with "Opposing Susceptibility"

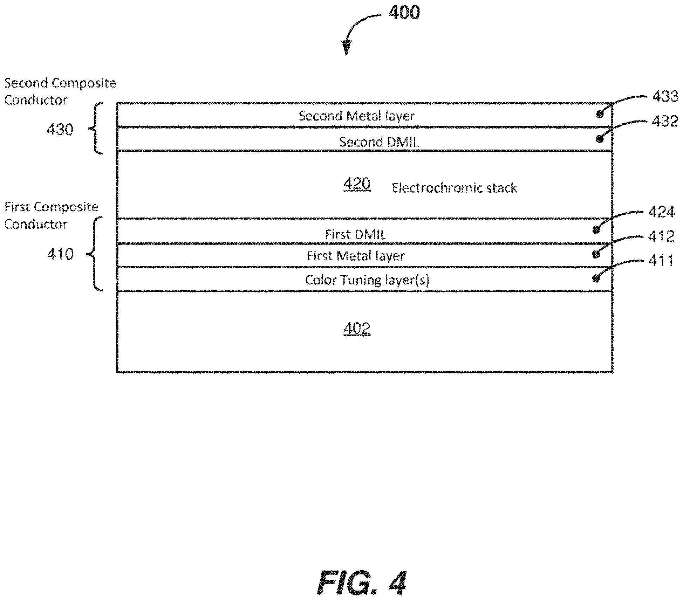

In certain embodiments, not according to the claimed invention, the materials used in one or more of the diffusion barrier layer(s), blocking/barrier layer(s), color tuning layer(s) and DMIL layer(s) are selected based on "opposing susceptibility" to adjacent layers to increase the transparency of the electrochromic device and/or tune the wavelength of light transmitted through the electrochromic device to a predetermined spectrum. For example, the materials may be selected to transmit a range of wavelengths associated with blue light through the electrochromic device. In some cases, the materials are selected to shift the range of wavelengths away from green or red. An example of a construction of an electrochromic device with a composite conductor including one or more color tuning layers is shown in **FIG. 4****.** In this example, the electrochromic device **400** does not have a separate diffusion barrier disposed on the substrate **402.**

**FIG. 4** depicts a schematic illustration of an electrochromic device **400** including a substrate **402**, a first composite conductor **410** disposed on the substrate **402,** an electrochromic stack **420** disposed on the first composite conductor **410**, and a second composite conductor **430** disposed on the electrochromic stack **420**. The first composite conductor **410** includes one or more color tuning layers **411,** a metal layer (e.g., silver) **412** disposed on the one or more color tuning layers **411,** and a first DMIL (e.g., TiO₂) **424** disposed on the metal layer **412.** The second composite conductor **420** includes a second DMIL **432** disposed on the electrochromic stack **420,** and a second metal layer **433.** In another embodiment, the order of the layers in either or both of the composite conductors **410** and **430** may be reversed.

In certain implementations, the second DMIL **432** is the same or substantially similar to the first DMIL **424** and/or the second metal layer **433** is the same or substantially similar to the first metal layer **412**. In other embodiments, the first composite conductor **410** and/or the second composite conductor **430** have additional layers. For example, one or more color tuning layers may be added to the second composite conductor **430.** As another example, a diffusion barrier may be added between the one or more color tuning layers **411** and the substrate **402.**

The one or more color tuning layers **411** is made of any of the materials described above for color tuning layers. The first metal layer **412** is made of any of the metal materials as described above for metal layers, including alloys, intermetallics, mixtures and/or layers of metals, and having the electrical, physical and optical properties of the metals as described above. In one embodiment, the first metal layer **412** has a thickness in a range of between about 1 nm and about 5 nm. In one embodiment, the first metal layer **412** has a thickness in a range of between about 5 nm and about 30 nm. In one embodiment, the first metal layer **412** has a thickness in a range of between about 10 nm and about 25 nm. In one embodiment, the first metal layer **412** has a thickness in a range of between about 15 nm and about 25 nm. In one embodiment, the first metal layer **412** has a thickness of less than about 20 nm. In one embodiment, the first metal layer **412** is made of silver.

The first DMIL **424** may be made of any of the materials described above for DMILs and has the associated electrical, physical and optical properties of the DMIL materials as described above. In one embodiment, the first DMIL **424** is of TiO₂. In one case, first DMIL **424** of TiO₂ is between 10 nm and 100 nm thick. In another case, the first DMIL **424** of TiO₂ is between 25 nm and 75 nm thick. In another case, the first DMIL **424** of TiO₂ is between 40 nm and 60 nm thick. In yet another case, the first DMIL **424** of TiO₂ is about 50 nm thick.

The second metal layer **433** is made of any of the metal materials as described above for metal layers, including alloys, intermetallics, mixtures and/or layers of metals, and having the electrical, physical and optical properties of the metals as described above. In one embodiment, the second metal layer **433** is silver, for example, having a thickness between about 1 nm and 5 nm thick. In one embodiment, the second metal layer **433** has a thickness between about 1 nm and about 5 nm thick. In one embodiment, the second metal layer **433** has a thickness between about 5 nm and about 30 nm. In one embodiment, the second metal layer **433** has a thickness between about 10 nm and about 25 nm. In one embodiment, the second metal layer **433** has a thickness between about 15 nm and about 25 nm. In one embodiment, the second metal layer **433** has a thickness of less than about 20 nm.

The second DMIL **432** may be made of any of the materials described above for DMILs and has the associated electrical, physical and optical properties of the DMIL materials as described above. In one embodiment, the second DMIL **432** is of TiO₂. In one case, second DMIL **432** of TiO₂ is between 10 nm and 100 nm thick. In another case, the second DMIL **432** of TiO₂ is between 25 nm and 75 nm thick. In another case, the second DMIL **432** of TiO₂ is between 40 nm and 60 nm thick. In yet another case, the second DMIL **432** of TiO₂ is about 50 nm thick.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductors have the construct of the first composite conductor **410** in **FIG. 4****.** In another implementation, the first conductor and the second conductors have the construct of the second composite conductor **430** in **FIG. 4**. In another implementation, the first conductor has the construct of the second composite conductor **430** in **FIG. 4** and the second conductor have the construct of the first composite conductor **410** in **FIG. 4****.** Alternatively, the order of the layers in each of the conductors in any of these implementations may be reversed.

In certain embodiments, one or more of the layers of materials describe herein can serve multiple functions. For example, in one embodiment, a layer disposed on the substrate function both as a diffusion barrier and an opposite susceptibility layer. Also, a layer can function both as a DMIL layer and an opposite susceptibility layer.

### - Electrochromic devices having Conductor(s) with TCO/Metal/TCO "IMI" stack

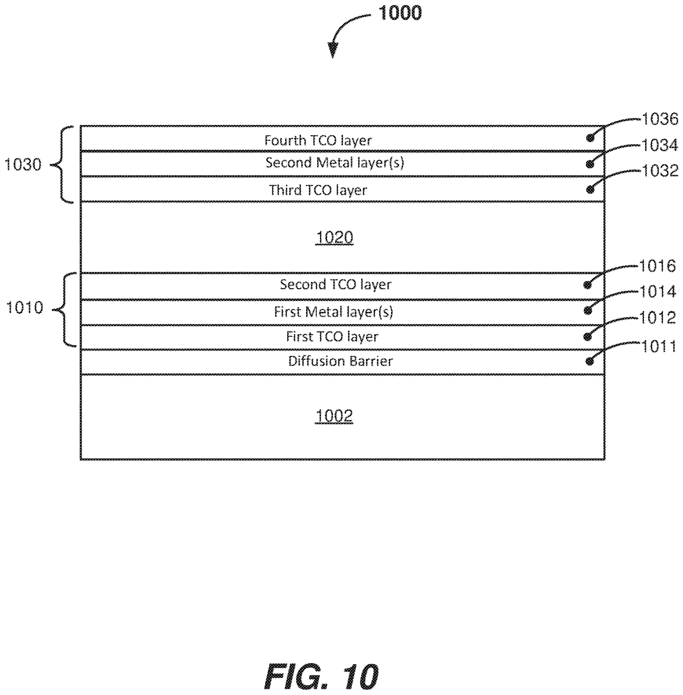

As discussed herein, certain implementations, not according to the claimed invention, pertain to an electrochromic device including at least one conductor having a TCO/Metal/TCO stack also referred to as an "IMI stack." An IMI stack generally includes one or more metal layers sandwiched between two TCO layers. For example, **FIG. 10** depicts a schematic illustration of an electrochromic device **1000** having a first conductor **1010** and a second conductor **1030,** each having an IMI stack. As shown, the electrochromic device **1000** includes a substrate **1002,** a diffusion barrier **1011** disposed on the substrate **1002,** the first composite conductor **1010** disposed on the diffusion barrier **1011,** an electrochromic stack **1020** disposed on the first composite conductor **1010,** and the second composite conductor **1030** disposed on the electrochromic stack **1020**. The first composite conductor **1010** includes a first TCO layer **1012** disposed on the diffusion barrier **1011,** a first metal layer(s) **1010** disposed on the first TCO layer **1012,** and a second TCO layer **1016** disposed on the first metal layer(s) **1014.** The second composite conductor **1030** includes a third TCO layer **1032** disposed on the electrochromic stack **1020**, a second metal layer(s) **1034** disposed on the third TCO layer **1032**, and a fourth TCO layer **1036** disposed on the second metal layer(s) **1034.** In another aspect, the first composite conductor **1010** and/or the second composite conductor **1030** further include one or more color tuning layers.

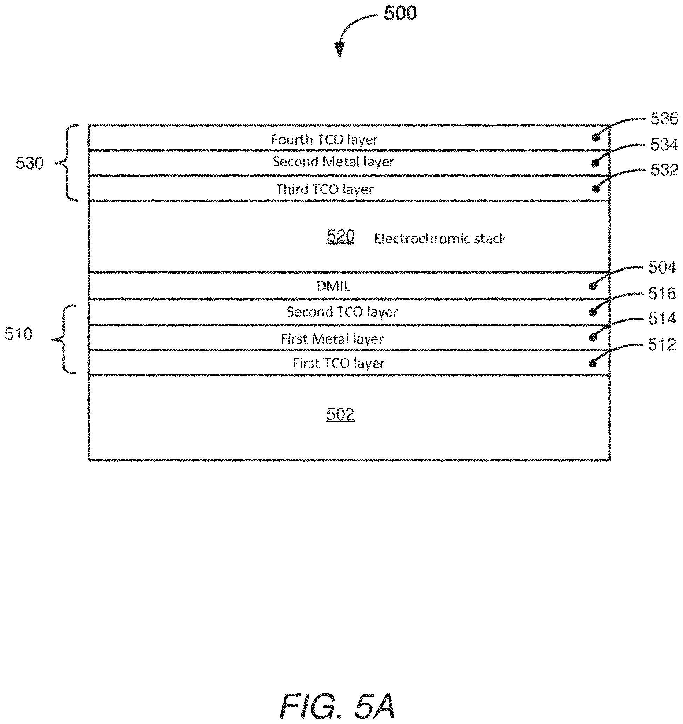

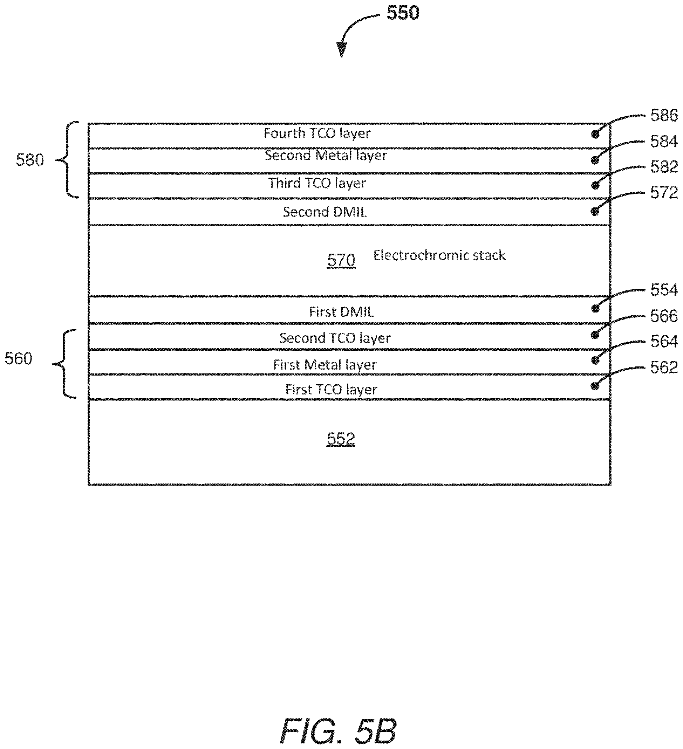

In another implementation, not according to the claimed invention, the electrochromic device **1000** shown in **FIG. 10** also includes (i) a DMIL between the electrochromic stack and the second TCO layer such as in the example shown in **FIG. 5A** and/or (ii) a DMIL between the electrochromic stack and the third TCO layer such as in the example shown in **FIG. 5B****.**

Each of the first TCO layer **1012,** second TCO layer **1016,** the third TCO layer **1032,** and the fourth TCO layer **1036** is made of any one of the materials described herein for TCOs and has the associated electrical, physical and optical properties of the TCO material. Some examples of suitable TCO materials include FTO, ITO, AZO, etc. These TCO layers may be made of the same or different TCO materials. In certain aspects, each of the TCO layers **1012, 1016, 1032,** and **1036** has a thickness of less than 200 nm. In one aspect, each of the TCO layers **1012, 1016**, **1032,** and **1036** has a thickness between 20-50 nm.

The first metal layer **1014** is made of any of the metal materials as described herein for metal layers, including alloys, intermetallics, mixtures and/or layers of metals, and having the electrical, physical and optical properties of the metals. In one aspect, the first metal layer **1014** is silver. In one aspect, the first metal layer **1014** has a thickness of less than 20 nm. The second metal layer **1034** is made of any of the metal materials as described herein for metal layers, including alloys, intermetallics, mixtures and/or layers of metals, and having the electrical, physical and optical properties of the metals. In one aspect, the second metal layer **1034** is silver. In some aspects, the second metal layer **1034** has a thickness of less than 20 nm. Some examples of suitable metals for the first and second metal layers **1014**, **1034** include Ag, Cu, Al, W, and Au.

The diffusion barrier **1011** is made of any of the materials described herein for a diffusion barrier. In some aspects, the diffusion barrier **1011** has a thickness of less than 100 nm.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **1010** in **FIG. 10**. In another implementation, the first conductor and the second conductor have the construct of the second conductor **1030** in **FIG. 10****.** In another implementation, the first conductor has the construct of the second conductor **1030** in **FIG. 10** and the second conductor has the construct of the first conductor **1010** in **FIG. 10****.** Alternatively, the order of the layers in each of the conductors in any of these implementations may be reversed.

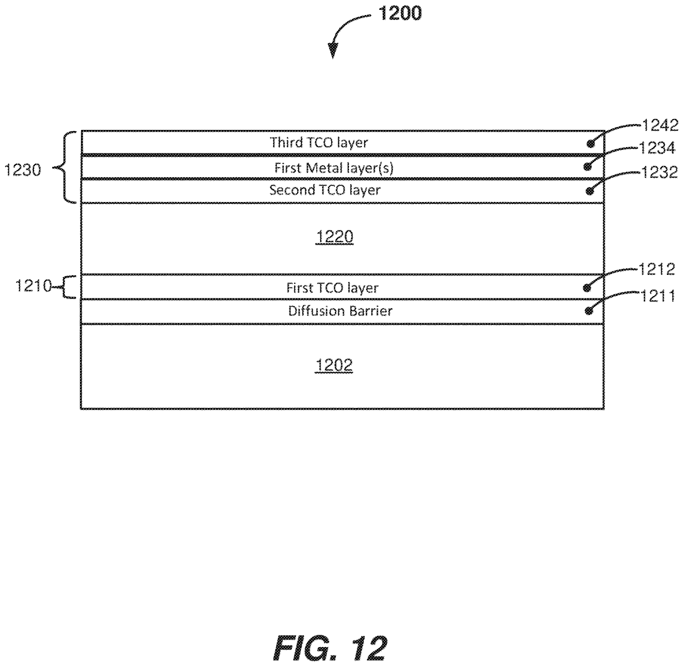

Another implementation is an electrochromic device having a first conductor that is a simple construct made of a single transparent conductive layer (e.g., polished TEC) and a second conductor made of a more complex multi-layer construct including an IMI stack. This implementation is according to the claimed invention. An example of the implementation is shown in **FIG. 12****.** The first and second conductor have low sheet resistance where the sheet resistance of the first conductor matches or approximately matches the sheet resistance of the second conductor, e.g., the sheet resistance of the first and second conductors may be about or lower than 7 Ohms/sq. The transparent conductive layer of the first conductor is a metal oxide material such as FTO, ITO, AZO, or the like. Having a second conductor with an IMI stack may provide the advantage of offering a more neutral color and higher transmissivity. For example, implementing an IMI stack may reduce the b* (i.e. blue-yellow component in CIE color coordinate system) closer to zero. According to the claimed invention, the first conductor is a single transparent conductive layer possibly made by pyrolytic processing and the second multi-layer conductor with matching or nearly matching sheet resistance after the electrochromic stack is deposited using another more complex type of processing since pyrolytic processing cannot be performed once the electrochromic device materials are deposited. This example may provide the technical advantage of providing savings in not having to form two multi-layer conductor structures.

**FIG. 12** depicts a schematic illustration of an electrochromic device **1200** having a first conductor **1210** and a second conductor **1230.** As shown, the electrochromic device **1200** includes a substrate **1202,** a diffusion barrier **1211** disposed on the substrate **1202**, the first conductor **1210** with a first transparent conductive oxide layer **1212** disposed on the diffusion barrier **1211,** an electrochromic stack **1220** disposed on the first conductor **1210,** and the second conductor **1230** disposed on the electrochromic stack **1220**. The second composite conductor **1030** includes an IMI stack with a metal layer or layers **1234** sandwiched between a second transparent conductive oxide (TCO) layer **1232** and a third TCO layer **1242.** As shown, the second transparent conductive oxide (TCO) layer **1232** is disposed on the electrochromic stack **1220**, the metal layer or layers **1234** is disposed on the second TCO layer **1232**, and the third TCO layer **1236** is disposed on the metal layer or layers **1234**. In another implementation, the second composite conductor **1230** further includes one or more color tuning layers adjacent the metal layer or layers **1234.**

Each of the TCO layers **1212, 1232,** and **1242** is made of any one of the materials described herein for TCOs and has the associated electrical, physical and optical properties of the TCO material. Some examples of suitable TCO materials include FTO, ITO, AZO, etc. These TCO layers may be made of the same or different TCO materials. In certain aspects, each of the TCO layers **1212, 1232,** and **1242** has a thickness of less than 200 nm. In one aspect, each of the TCO layers **1212, 1232,** and **1242** has a thickness between 20-50 nm.

The metal layer(s) **1234** is made of any of the metal materials as described herein for metal layers, including alloys, intermetallics, mixtures and/or layers of metals, and having the electrical, physical and optical properties of the metals. In one aspect, the metal layer(s) **1234** is silver. In one aspect, the metal layer(s) **1234** has a thickness of less than 20 nm. Some examples of suitable metals for the metal layer (s) **1234** include Ag, Cu, Al, W, and Au.

The sheet resistance of the transparent conductive layer **1212** of the first conductor **1210** matches or approximately matches the sheet resistance of the second conductor **1230.** According to the claimed invention, the sheet resistance of the first conductor **1210** and second conductor **1230** varies by less than 20%. In another aspect, the sheet resistance of the first conductor **1210** and second conductor **1230** varies by less than 10%. In another aspect, the sheet resistance of the first conductor **1210** and second conductor **1230** varies by less than 5%.

The diffusion barrier **1211** is made of any of the materials described herein for a diffusion barrier. In some aspects, the diffusion barrier **1211** has a thickness of less than 100 nm.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **1210** in **FIG. 12****.** In another implementation, not according to the claimed invention, the first conductor and the second conductor have the construct of the second conductor **1230** in **FIG. 12****.** In another implementation, the first conductor has the construct of the second conductor **1230** in **FIG. 12** and the second conductor has the construct of the first conductor **1210** in **FIG. 12****.** Alternatively, the order of the layers in each of the conductors in any of these implementations may be reversed.

### - DMIL between Conductor with TCO/Metal/TCO IMI stack and Electrochromic stack

In certain embodiments, not according to the claimed invention, an electrochromic device has a lower composite conductor including a TCO (e.g., ITO)/Metal/TCO (e.g., ITO) stack also referred to as an "IMI stack" and a DMIL (e.g., TiO₂) between the IMI stack and the electrochromic stack. An example of such an electrochromic device is shown in **FIG. 5****.** In these embodiments, the DMIL layer may improve durability of the electrochromic device. There may be a DMIL between each IMI, of two, and an electrochromic stack that is sandwiched therebetween, that is, IMI/DMIL/EC stack/DMIL/IMI, optionally with color tuning and/or diffusion barrier layers between that structure and the substrate.

**FIG. 5A** depicts a schematic illustration of an electrochromic device **500** including a substrate **502,** a first composite conductor **510** disposed on the substrate **502,** a DMIL **504** disposed on the first composite conductor **510,** an electrochromic stack **520** disposed on the DMIL **504,** and a second composite conductor **530** disposed on the electrochromic stack **520.** The first composite conductor **510** includes a first TCO layer **512** disposed on the substrate **502,** a first metal layer (e.g., silver) **514** disposed on the first TCO layer **512,** and a second TCO layer **516** disposed on the first metal layer **514.** The second composite conductor **530** includes a third TCO layer **532** disposed on the electrochromic stack **520**, a second metal layer (e.g., silver) **534** disposed on the third TCO layer **532,** and a fourth TCO layer **536** disposed on the second metal layer **534**. Another embodiment also includes a second DMIL between the electrochromic stack and the third TCO layer as shown in **FIG. 5B****.**

In one implementation, the first and second composite conductors **510** and **530** have the same or substantially similar material layers in a mirrored arrangement. That is, the fourth TCO **536** is the same or substantially similar to the first TCO layer **512,** the third TCO layer **532** is the same or substantially similar to the second TCO layer **516,** and the first metal layer **514** is the same or substantially similar to the second metal layer **534.** In other embodiments, the first and second composite conductors **510** and **530** may have different orders of the same layers. In yet other embodiments, the first and second composite conductors **510** and **530** may have one more different material layers. In certain aspects, the first composite conductor **510** and/or the second composite conductor **530** have one or more color tuning layers.

The first TCO layer **512** is made of any of the materials described above for TCOs and has the associated electrical, physical and optical properties of the TCO materials as described above. In one embodiment, the first TCO layer **512** is a FTO layer or other TCO material layer between about 200 nm and 500 nm thick. In another embodiment, the first TCO layer **512** has a thickness in a range between about 20 nm - 50 nm. In one case, the first TCO layer **512** has a thickness of less than about 200 nm. The first metal layer (e.g., silver) **514** is made of any of the metal materials as described above for metal layers, including alloys, intermetallics, mixtures and/or layers of metals, and having the electrical, physical and optical properties of the metals as described above. In one embodiment, the first metal layer **514** is silver. In one embodiment, the first metal layer **514** has a thickness in the range of about 1 nm and about 5 nm. In one embodiment, the first metal layer **514** has a thickness in the range of about 5 nm to about 30 nm. In one embodiment, the first metal layer **514** has a thickness in the range of about 10 nm and about 25 nm. In one embodiment, the first metal layer **514** has a thickness in the range of about 15 nm and about 25 nm. In one embodiment, the first metal layer **512** has a thickness of less than about 20 nm.

The second TCO layer **516** is made of any of the materials described above for TCOs and has the associated electrical, physical and optical properties of the TCO materials as described above. In one embodiment, the second TCO layer **516** is a FTO or other material layer between about 200 nm and 500 nm thick. In another embodiment, the second TCO layer **516** has a thickness in a range between about 20 nm - 50 nm. In one case, the second TCO layer **516** has a thickness of less than about 200 nm. The third TCO layer **532** is made of any of the materials described above for TCOs and has the associated electrical, physical and optical properties of the TCO materials as described above. In one embodiment, the third TCO layer 532 is a FTO or other TCO material layer between about 200 nm and 500 nm thick. In another embodiment, the third TCO layer **532** has a thickness in a range between about 20 nm - 50 nm. In one case, the third TCO layer **532** has a thickness of less than about 200 nm. The second metal layer **534** is made of any of the metal materials as described above for metal layers, including alloys, intermetallics, mixtures and/or layers of metals, and having the electrical, physical and optical properties of the metals as described above. In one embodiment, the second metal layer **534** is silver. In one embodiment, the second metal layer **534** has a thickness in the range of between about 1 nm and about 5 nm thick. In one embodiment, the second metal layer **534** has a thickness in the range of between about 5 nm to about 30 nm. In one embodiment, the second metal layer **534** has a thickness in the range of between about 10 nm and about 25 nm. In one embodiment, the second metal layer **534** has a thickness between about 15 nm and about 25 nm. In one embodiment, the second metal layer **534** has a thickness of less than about 20 nm.

The fourth TCO layer **536** is made of any of the materials described above for TCOs and has the associated electrical, physical and optical properties of the TCO materials as described above. In one embodiment, the fourth TCO layer **536** is a FTO or other TCO material layer between about 200 nm and 500 nm thick. In another embodiment, the fourth TCO layer **536** has a thickness in a range between about 20 nm - 50 nm. In one case, the fourth TCO layer **536** has a thickness of less than about 200 nm. The first DMIL **504** may be made of any of the materials described above for DMILs and has the associated electrical, physical and optical properties of the DMIL materials as described above. In one embodiment, the first DM IL **504** is of TiO₂. In one case, the first DMIL **504** of TiO₂ is between 10 nm and 100 nm thick. In another case, the first DMIL **504** of TiO₂ is between 25 nm and 75 nm thick. In another case, the first DMIL **504** of TiO₂ is between 40 nm and 60 nm thick. In yet another case, the first DMIL **504** of TiO₂ is about 50 nm thick.

**FIG. 5B** depicts a schematic illustration of an electrochromic device **500** including a substrate **552,** a first composite conductor **560** disposed on the substrate **552,** a first DMIL **554** disposed on the first composite conductor **550,** an electrochromic stack **570** disposed on the first DMIL **554,** a second DMIL **572** disposed on the electrochromic stack **520,** and a second composite conductor **580** disposed on the second DMIL **572**. The first composite conductor **560** includes a first TCO layer **562** disposed on the substrate **552,** a first metal layer (e.g., silver) **564** disposed on the first TCO layer **562,** and a second TCO layer **566** disposed on the first metal layer **564.** The second composite conductor **580** includes a third TCO layer **582** disposed on the second DMIL **572**, a second metal layer (e.g., silver) **584** disposed on the third TCO layer **582,** and a fourth TCO layer **586** disposed on the second metal layer **584.**

In one implementation, the first and second composite conductors **560** and **580** have the same or substantially similar material layers in a mirrored arrangement. That is, the fourth TCO **586** is the same or substantially similar to the first TCO layer **562,** the third TCO layer **532** is the same or substantially similar to the second TCO layer **566,** and the first metal layer **564** is the same or substantially similar to the second metal layer **584.** In other embodiments, the first and second composite conductors **560** and **580** may have different orders of the same layers. In yet other embodiments, the first and second composite conductors **560** and **580** may have one more different material layers. In certain aspects, the first composite conductor **560** and/or the second composite conductor **580** have one or more color tuning layers.

The first TCO layer **562** is made of any of the materials described above for TCOs and has the associated electrical, physical and optical properties of the TCO materials as described above. In one embodiment, the first TCO layer **562** is a FTO or other TCO material layer between about 200 nm and 500 nm thick. In another embodiment, the first TCO layer **562** has a thickness in a range between about 20 nm - 50 nm. In one case, the first TCO layer **562** has a thickness of less than about 200 nm. The first metal layer (e.g., silver) **564** is made of any of the metal materials as described above for metal layers, including alloys, intermetallics, mixtures and/or layers of metals, and having the electrical, physical and optical properties of the metals as described above. In one embodiment, the first metal layer **564** is silver. In one embodiment, the first metal layer **564** has a thickness in the range of about 1 nm and about 5 nm. In one embodiment, the first metal layer **564** has a thickness in the range of about 5 nm to about 30 nm. In one embodiment, the first metal layer **564** has a thickness in the range of about 10 nm and about 25 nm. In one embodiment, the first metal layer **564** has a thickness in the range of about 15 nm and about 25 nm. In one embodiment, the first metal layer **564** has a thickness of less than about 20 nm.

The second TCO layer **570** is made of any of the materials described above for TCOs and has the associated electrical, physical and optical properties of the TCO materials as described above. In one embodiment, the second TCO layer **570** is a FTO layer or other material layer between about 200 nm and 500 nm thick. In another embodiment, the second TCO layer **570** has a thickness in a range between about 20 nm - 50 nm. In one case, the second TCO layer **570** has a thickness of less than about 200 nm. The third TCO layer **582** is made of any of the materials described above for TCOs and has the associated electrical, physical and optical properties of the TCO materials as described above. In one embodiment, the third TCO layer **582** is a FTO or other TCO material layer between about 200 nm and 500 nm thick. In another embodiment, the third TCO layer **582** has a thickness in a range between about 20 nm - 50 nm. In one case, the third TCO layer **582** has a thickness of less than about 200 nm. The second metal layer **584** is made of any of the metal materials as described above for metal layers, including alloys, intermetallics, mixtures and/or layers of metals, and having the electrical, physical and optical properties of the metals as described above. In one embodiment, the second metal layer **584** is silver. In one embodiment, the second metal layer **584** has a thickness in the range of between about 1 nm and about 5 nm thick. In one embodiment, the second metal layer **584** has a thickness in the range of between about 5 nm to about 30 nm. In one embodiment, the second metal layer **584** has a thickness in the range of between about 10 nm and about 25 nm. In one embodiment, the second metal layer **584** has a thickness between about 15 nm and about 25 nm. In one embodiment, the second metal layer **584** has a thickness of less than about 20 nm.

The fourth TCO layer **586** is made of any of the materials described above for TCOs and has the associated electrical, physical and optical properties of the TCO materials as described above. In one embodiment, the fourth TCO layer **586** is a FTO or other TCO material layer between about 200 nm and 500 nm thick. In another embodiment, the fourth TCO layer **586** has a thickness in a range between about 20 nm - 50 nm. In one case, the fourth TCO layer **586** has a thickness of less than about 200 nm. The first DMIL **584** may be made of any of the materials described above for DMILs and has the associated electrical, physical and optical properties of the DMIL materials as described above. In one embodiment, the first DMIL **584** is of TiO₂. In one case, the first DMIL **584** of TiO₂ is between 10 nm and 100 nm thick. In another case, the first DMIL **584** of TiO₂ is between 25 nm and 75 nm thick. In another case, the first DMIL **584** of TiO₂ is between 40 nm and 60 nm thick. In yet another case, the first DMIL, **584** of TiO₂ is about 50 nm thick.

The second DMIL **572** may be made of any of the materials described above for DMILs and has the associated electrical, physical and optical properties of the DMIL materials as described above. In one embodiment, the second DMIL **572** is of TiO₂. In one case, the second DMIL **572** of TiO₂ is between 10 nm and 100 nm thick. In another case, the second DMIL **572** of TiO₂ is between 25 nm and 75 nm thick. In another case, the second DMIL **572** of TiO₂ is between 40 nm and 60 nm thick. In yet another case, the second DMIL **572** of TiO₂ is about 50 nm thick. In one embodiment, the second DMIL **572** has the same characteristics of first DMIL, **554.**

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **510** in **FIG. 5A****.** In another implementation, the first conductor and the second conductor have the construct of the first conductor **560** in **FIG. 5B****.** In another implementation, the first conductor and the second conductors have the construct of the second conductor **530** in **FIG. 5A****.** In another implementation, the first conductor and the second conductor have the construct of the second conductor **580** in **FIG. 5B****.** In another implementation, the first conductor has the construct of the second composite conductor **530** in **FIG. 5A** and the second conductor have the construct of the first composite conductor **510** in **FIG. 5A****.** In another implementation, the first conductor has the construct of the second composite conductor **580** in **FIG. 5B** and the second conductor have the construct of the first composite conductor **560** in **FIG. 5B****.** Alternatively, the order of the layers in each of the conductors in any of these implementations may be reversed.

### - DMIL between Conductor and the Electrochromic stack

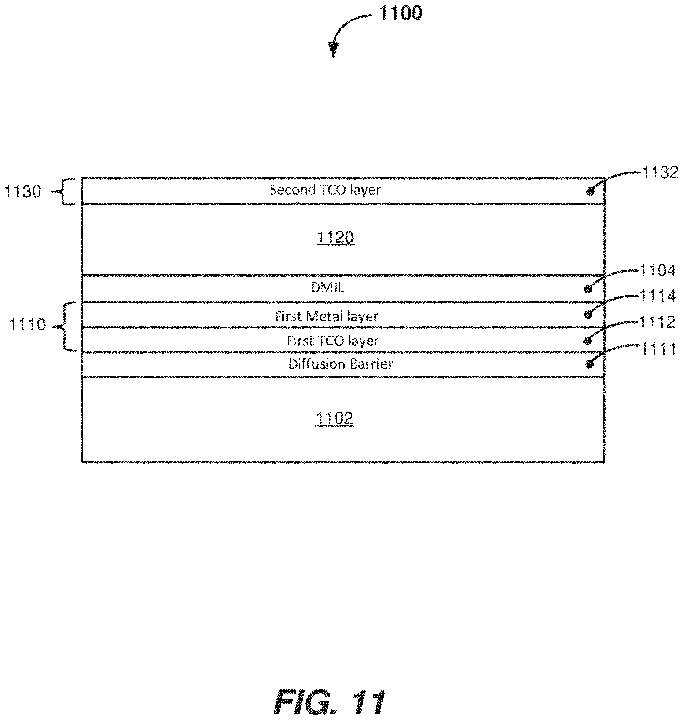

In certain embodiments, not according to the claimed invention, an electrochromic device has one or more of its conductors separated from the electrochromic stack by a DMIL. The DMIL may improve the durability of the electrochromic device. Some examples of materials that can be used for a DMIL include TiOₓ and TiO₂. For example, the DMIL may be located between each IMI stack, of two IMI stacks, and an electrochromic (EC) stack that is sandwiched therebetween, that is, IMI/DMIL/EC stack/DMIL/IMI, optionally with one or more color tuning layers and/or a diffusion barrier between that structure and the substrate. An example of such an electrochromic device is shown in **FIG. 5B****.** In another example, the DMIL, may be located between one of the IMI stacks and an electrochromic stack sandwiched between the IMI stacks, that is, IMI/DMIL/EC stack/IMI, optionally with one or more color tuning layers and/or a diffusion barrier between that structure and the substrate. An example of such an electrochromic device is shown in **FIG. 5A****.** In another example, the DMIL may be located between a metal layer or layers and an electrochromic stack sandwiched between the metal layer(s) and a TCO layer, optionally with one or more color tuning layers and/or a diffusion barrier between that structure and the substrate. An example of such an electrochromic device is shown in **FIG. 11****.**

**FIG. 11** depicts a schematic illustration of an electrochromic device **1100** having a substrate **1102,** a diffusion barrier **1111** disposed on the substrate **1102**, and a multi-layer conductor **1110** disposed on the diffusion barrier **1111.** The multi-layer conductor **1110** includes a first TCO layer disposed on the diffusion barrier **1111** and a first metal layer disposed on the first TCO layer. The electrochromic device **1100** also includes an electrochromic stack **1120** disposed on the DMIL **1104** and a single layer conductor with a second TCO layer **1132** disposed on the electrochromic stack **1120**. Optionally, the electrochromic device may further include one or more color tuning layers adjacent the first metal layer.

In another implementation, the electrochromic device **1100** further includes a second multi-layer conductor including the second TCO layer **1132** and a second metal layer and also a second DMIL sandwiched between the electrochromic stack **1120** and the second metal layer. Optionally, the electrochromic device **1100** may further include one or more color tuning layers adjacent the first metal layer and/or the second metal layer.

Each TCO layer of the electrochromic devices described in this section can be made of any TCO material described herein and has associated electrical, physical and optical properties. Some examples of suitable TCO materials include FTO, ITO, AZO, etc. In one aspect, each TCO layer of an electrochromic device described in this section has a thickness of less than 200 nm. In another aspect, each TCO layer of an electrochromic device described in this section has a thickness between 20-50 nm. Further, each metal layer of the electrochromic devices described in this section can be made of any metal material described herein for metal layers, including alloys, intermetallics, mixtures and/or layers of metals, and having the electrical, physical and optical properties of the metals. Some examples of suitable metals include Ag, Cu, Al, W, and Au. In one aspect, each metal layer of an electrochromic device described in this section has a thickness of less than 20 nm. In one aspect, the diffusion barrier has a thickness of less than 100 nm.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **1110** in **FIG. 11****.** In another implementation, the first conductor and the second conductor have the construct of the second conductor **1130** in **FIG. 11****.** In another implementation, the first conductor has the construct of the second conductor **1130** in **FIG. 11** and the second conductor has the construct of the first conductor **1110** in **FIG. 11****.** Alternatively, the order of the layers in each of the conductors in any of these implementations may be reversed.

### - Barrier/Blocking Layer(s)

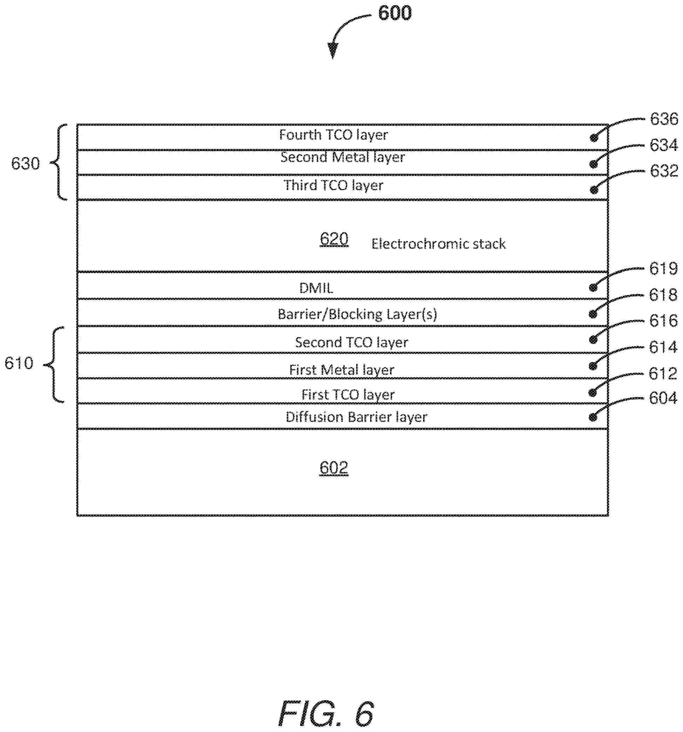

According to the claimed invention, an electrochromic device includes one or more barrier or blocking layers disposed between the lower conductor and the electrochromic stack to help block diffusion or migration of metal (e.g., silver) into the electrochromic stack and migration of lithium into the lower conductor. A barrier layer may contain a nitride, a carbide, an oxynitride, or an oxycarbide of various metals or metalloids, e.g., a nitride barrier layer may include silicon nitride, aluminum nitride, zirconium nitride, titanium nitride, zinc nitride, magnesium nitride, gallium nitride, tantalum nitride, niobium nitride, bismuth nitride, yttrium nitride, iridium nitride, indium nitride, tin nitride, nickel nitride, hafnium nitride. Thus barrier layers of various implementations may include carbides, oxynitrides and oxycarbide analogs of the aforementioned metals and metalloids. For example, a barrier/blocking layer of certain embodiments may include tantalum nitride, titanium nitride, silicon nitride, silicon oxynitride and the like, which can serve to block migration of silver from the lower conductor into the electrochromic stack. Titanium nitride and tantalum nitride, e.g., are particularly good in barrier layers to prevent metal migration. An example of an electrochromic device with one or more barrier/ blocking layers disposed between the lower conductor and the electrochromic stack is shown in **FIG. 6**, this example is not according to the claimed invention.

**FIG. 6** depicts a schematic illustration of an electrochromic device **600,** according to embodiments. The electrochromic device **600** includes a substrate **602,** one or more diffusion barrier layers **604** disposed on the substrate **602,** a first composite conductor **610** disposed on the diffusion barrier layer(s) **604**, one or more barrier/blocking layers **618** (e.g., material layers of TaN or TiN) disposed on the a first composite conductor **610,** a first DMIL **619** (e.g., TiO₂) disposed on the one or more barrier/blocking layers **618,** an electrochromic stack **620** disposed on the first DMIL **619,** and a second composite conductor **630** disposed on the electrochromic stack **620**. The first composite conductor **610** includes a first TCO layer **612** (e.g., ITO layer) disposed on the one or more diffusion barrier layers **604**, a first metal layer **614** (e.g., silver layer) disposed on the first TCO layer **612,** and a second TCO layer **616** disposed on the first metal layer **614.** The second composite conductor **630** includes a third TCO layer **632** disposed on electrochromic stack **620,** a second metal layer **634** disposed on the third TCO layer **632,** and a fourth TCO layer **636** disposed on the second metal layer **634.** The one or more barrier/blocking layers **618** are between the first DMIL **619** and the second TCO layer **616** to provide a barrier for diffusion into the electrochromic stack **620**. For example, if the metal layer **614** is a silver layer and the one or more barrier/blocking layers **618** comprise TaN or TiN, then the TaN or TiN barrier/blocking layers **618** can block migration of silver into the electrochromic stack **620.**

The first TCO layer **612** is made of any of the materials described above for TCOs and has the associated electrical, physical and optical properties of the TCO materials as described above. In one embodiment, the first TCO layer **612** is a FTO or other TCO material layer between about 200 nm and 500 nm thick. In another embodiment, the first TCO layer **612** has a thickness in a range between about 20 nm - 50 nm. In one case, the first TCO layer **612** has a thickness of less than about 200 nm. The first metal layer **614** is made of any of the metal materials as described above for metal layers, including alloys, intermetallics, mixtures and/or layers of metals, and having the electrical, physical and optical properties of the metals as described above. In one embodiment, the first metal layer **614** is silver. In one embodiment, the first metal layer **614** has a thickness in the range of between about 1 nm and 5 nm thick. In one embodiment, the first metal layer **614** has a thickness in the range of between about is about 5 nm to about 30 nm. In one embodiment, the first metal layer **614** has a thickness in the range of between about 10 nm and about 25 nm. In one embodiment, the first metal layer **614** has a thickness in the range of between about 15 nm and about 25 nm. In one embodiment, the first metal layer **612** has a thickness of less than about 20 nm.

The second TCO layer **616** is made of any of the materials described above for TCOs and has the associated electrical, physical and optical properties of the TCO materials as described above. In one embodiment, the second TCO layer **616** is a FTO layer or other material layer between about 200 nm and 500 nm thick. In another embodiment, the second TCO layer **616** has a thickness in a range between about 20 nm - 50 nm. In one case, the second TCO layer **616** has a thickness of less than about 200 nm. The third TCO layer **632** is made of any of the materials described above for TCOs and has the associated electrical, physical and optical properties of the TCO materials as described above. In one embodiment, the third TCO layer **632** is a FTO or other TCO material layer between about 200 nm and 500 nm thick. In another embodiment, the third TCO layer **632** has a thickness in a range between about 20 nm - 50 nm. In one case, the third TCO layer **632** has a thickness of less than about 200 nm. The second metal layer **634** is made of any of the metal materials as described above for metal layers, including alloys, intermetallics, mixtures and/or layers of metals, and having the electrical, physical and optical properties of the metals as described above. In one embodiment, the second metal layer **534** is silver. In one embodiment, the second metal layer **534** has a thickness in the range of between about 1 nm and 5 nm thick. In one embodiment, the second metal layer **634** has a thickness in the range of between about 5 nm and about 30 nm. In one embodiment, the second metal layer **634** has a thickness in the range of between about 10 nm and about 25 nm. In one embodiment, the second metal layer **634** has a thickness in the range of between about 15 nm and about 25 nm. In one embodiment, the second metal layer **634** has a thickness of less than about 20 nm.

The fourth TCO layer **636** is made of any of the materials described above for TCOs and has the associated electrical, physical and optical properties of the TCO materials as described above. In one embodiment, the fourth TCO layer **636** is a FTO layer between about 200 nm and 500 nm thick. In another embodiment, the fourth TCO layer **636** has a thickness in a range between about 20 nm - 50 nm. In one case, the fourth TCO layer **636** has a thickness of less than about 200 nm. The barrier/blocking layers **618** is made of materials described above for barrier/blocking layers and has all the associated electrical, physical and optical properties of the barrier/blocking layers. The first DMIL **619** may be made of any of the materials described above for DMILs and has the associated electrical, physical and optical properties of the DMIL, materials as described above. In one embodiment, the first DMIL **619** is of TiO₂. In one case, the first DMIL **619** of TiO₂ is between 10 nm and 100 nm thick. In another case, the first DMIL **619** of TiO₂ is about 50 nm thick. In one case, the first DMIL **619** of TiO₂ is between 10 nm and 100 nm thick. In another case, the first DMIL **619** of TiO₂ is between 25 nm and 75 nm thick. In another case, the first DMIL **619** of TiO₂ is between 40 nm and 60 nm thick. In yet another case, the first DMIL **619** of TiO₂ is about 50 nm thick.

In one implementation, the first and second composite conductors **610** and **630** have the same or substantially similar material layers with the illustrated mirrored layout. That is, the first TCO layer **612** is the same or substantially similar to the fourth TCO layer **636,** the first metal layer **614** is the same or substantially similar to the second metal layer **634,** and the second TCO layer is the same or substantially similar to the third TCO layer **632.** In other embodiments, the first and second composite conductors may have different orders of the same layers. In yet other embodiments, the first and second composite conductors may have one more different material layers. In certain implementations, the electrochromic device **600** omits the diffusion barrier **604.** In certain aspects, the first and/or second composite conductor **610, 630** of the electrochromic device **600** shown in **FIG. 6** further includes one or more color tuning layers adjacent the metal layers.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first composite conductor **610** in **FIG. 6****.** In another implementation, the first conductor and the second conductor have the construct of the second composite conductor **630** in **FIG. 6****.** In another implementation, the first conductor has the construct of the second composite conductor **630** in **FIG. 6** and the second conductor have the construct of the first composite conductor **610** in **FIG. 6****.** Alternatively, the order of the layers in each of the conductors in any of these implementations may be reversed.

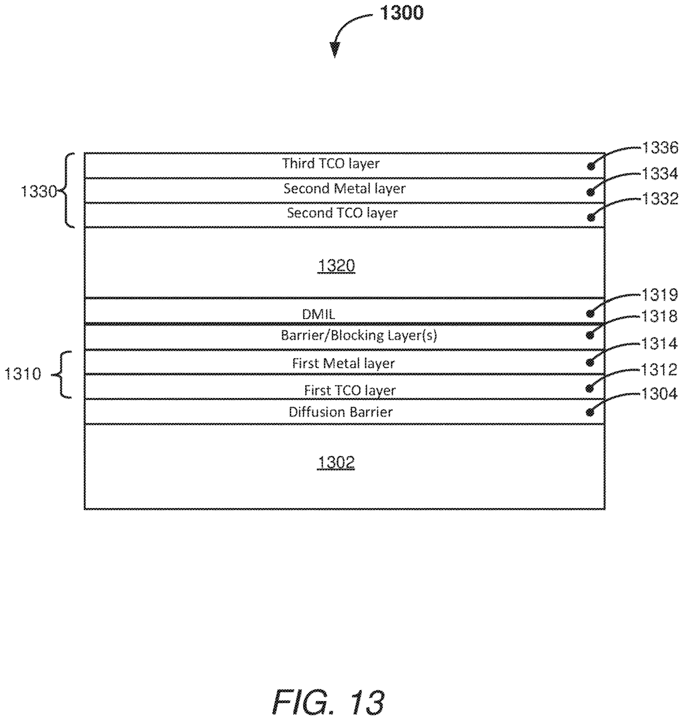

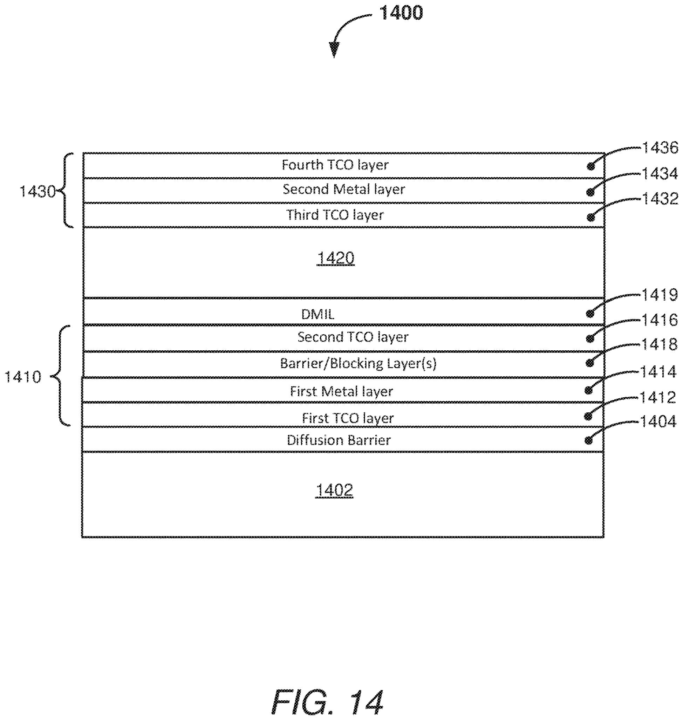

Other examples of an electrochromic device with one or more barrier/blocking layer(s) are shown in **FIGS. 13** and **14****.** These examples are not according to the claimed invention, In certain implementations, one or more barrier/blocking layers are included to prevent metal (e.g., silver) from migrating from a metal layer into the electrochromic stack and/or to prevent lithium from migrating from the electrochromic stack into a conductor.

**FIG. 13** depicts a schematic illustration of an electrochromic device **1300,** according to embodiments. The electrochromic device **1300** includes a substrate **1302,** one or more diffusion barrier layers **1304** disposed on the substrate **1302,** a first multi-layer conductor **1310** disposed on the diffusion barrier layer(s) **1304,** one or more barrier/blocking layers **618** (e.g., material layers of TaN or TiN) disposed on the first multi-layer conductor **1310,** a DMIL **1319** (e.g., TiOₓ) disposed on the one or more barrier/blocking layers **1318,** an electrochromic stack **1320** disposed on the DMIL **1319,** and a second multi-layer conductor **1330** disposed on the electrochromic stack **1320.** The first multi-layer conductor **1330** includes a first TCO layer **1312** disposed on the diffusion barrier **1304** and a first metal layer **1314** disposed on the first TCO layer **1312.** The second multi-layer conductor **630** includes a second TCO layer **1332** disposed on electrochromic stack **1320,** a second metal layer **1334** disposed on the second TCO layer **1332,** and a third TCO layer **1336** disposed on the second metal layer **1334.** The barrier/blocking layer(s) **1318** are between the DMIL **1319** and the metal layer(s) **1314** to provide a barrier for migration of metal into the electrochromic stack **1320** and/or to provide a barrier for migration of lithium from the electrochromic stack **1320** into the first conductor **1310.** For example, if the first metal layer **1314** includes silver and the barrier/blocking layer(s) **1318** comprise TaN or TiN, then the TaN or TiN in the barrier/blocking layer(s) **1318** can block migration of the silver from the first metal layer **1314** into the electrochromic stack **1320** and can block migration of lithium from the electrochromic stack **1320** into the first conductor **1310.** In another implementation, the electrochromic device **1300** further includes one or more color tuning layers adjacent one or more of the metal layers **1314** and **1334.**

The TCO layers **1312, 1332,** and **1336** are each made of any of the materials described above for TCOs and has the associated electrical, physical and optical properties of the TCO materials as described above. In one aspect, each of the TCO layers **1312, 1332,** and **1336** are less than 200 nm thick. In another aspect, each of the TCO layers **1312, 1332,** and **1336** are between 20 nm and 50 nm thick. The metal layers **1314, 1334** are each made of any of the metal materials as described herein for metal layers, including alloys, intermetallics, mixtures and/or layers of metals, and having the electrical, physical and optical properties of the metals as described above. In one embodiment, the first metal layer **1314** and/or the second metal layer **1334** includes silver. In one aspect, each of the metal layers **1314, 1334** are less than 20 nm thick. The barrier/blocking layer(s) **1318** is made of materials described above for barrier/blocking layers and has all the associated electrical, physical and optical properties of the barrier/blocking layers. In one aspect, the barrier/blocking layer(s) **1318** is less than 100 nm thick. In one embodiment, the barrier/blocking layer(s) **1318** includes TaN. The DMIL **1319** may be made of any of the materials described above for DMILs and has the associated electrical, physical and optical properties of the DMIL materials as described above. In one embodiment, the DMIL **1319** is made of TiOₓ. In one case, the DMIL **1319** is less than 100 nm thick. In another implementation, the electrochromic device **1300** omits the diffusion barrier **1304.**

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **1310** in **FIG. 13****.** In another implementation, the first conductor and the second conductor have the construct of the second conductor **1330** in **FIG. 13****.** In another implementation, the first conductor has the construct of the second conductor **1330** in **FIG. 13** and the second conductor has the construct of the first conductor **1310** in **FIG. 13****.** Alternatively, the order of the layers in each of the conductors in any of these implementations may be reversed.

**FIG. 14** depicts a schematic illustration of an electrochromic device **1300,** according to embodiments. The electrochromic device **1400** includes a substrate **1402,** a diffusion barrier **1404** disposed on the substrate **1402,** a first multi-layer conductor **1410** disposed on the diffusion barrier **1404,** a DMIL **1419** (e.g., TiOₓ) disposed on the first multi-layer conductor **1410,** an electrochromic stack **1420** disposed on the DMIL **1419,** and a second multi-layer conductor **1430** disposed on the electrochromic stack **1420.** The first multi-layer conductor **1430** includes a first TCO layer **1412** disposed on the diffusion barrier **1404,** a first metal layer **1414** disposed on the first TCO layer **1412,** one or more barrier/blocking layers **618** (e.g., material layers of TaN or TiN) disposed on the first metal layer **1414,** and a second TCO layer **1415** disposed on the barrier/blocking layer(s) **618.** The second multi-layer conductor **630** includes an IMI stack with a second metal layer 1434 between a third TCO layer **1432** and a fourth TCO layer **1436.** In another implementation, the electrochromic device **1400** further includes one or more color tuning layers adjacent one or more of the metal layers **1414** and **1434.**

The TCO layers **1412, 1416, 1432,** and **1436** are each made of any of the materials described above for TCOs and has the associated electrical, physical and optical properties of the TCO materials as described above. In one aspect, each of the TCO layers **1412, 1416, 1432,** and **1436** are less than 200 nm thick. In another aspect, each of the TCO layers **1412, 1416, 1432,** and **1436** are between 20 nm and 50 nm thick. The metal layers **1414, 1434** are each made of any of the metal materials as described herein for metal layers, including alloys, intermetallics, mixtures and/or layers of metals, and having the electrical, physical and optical properties of the metals as described above. In one embodiment, the first metal layer **1414** and/or the second metal layer **1434** includes silver. In one aspect, each of the metal layers **1414, 1434** are less than 20 nm thick. The barrier/blocking layer(s) **1418** is made of materials described above for barrier/blocking layers and has all the associated electrical, physical and optical properties of the barrier/blocking layers. In one aspect, the barrier/blocking layer(s) **1418** is less than 100 nm thick. In one embodiment, the barrier/blocking layer(s) **1418** includes TaN. The DMIL **1419** may be made of any of the materials described above for DMILs and has the associated electrical, physical and optical properties of the DMIL materials as described above. In one embodiment, the DM IL **1419** is made of TiOₓ. In one case, the DMIL **1419** is less than 100 nm thick. In another implementation, the electrochromic device **1400** omits the diffusion barrier **1404.**

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **1410** in **FIG. 14****.** In another implementation, the first conductor and the second conductor have the construct of the second conductor **1430** in **FIG. 14****.** In another implementation, the first conductor has the construct of the second conductor **1430** in **FIG. 14** and the second conductor has the construct of the first conductor **1410** in **FIG. 14****.** Alternatively, the order of the layers in each of the conductors in any of these implementations may be reversed.

### - Protective Cap

In certain embodiments, not according to the claimed invention, an electrochromic device includes a protective cap layer on top of a key conductive layer (e.g., metal layer) to protect it from being damaged during one or more fabrication operations. For example, a key conductive layer may be of aluminum, which is readily oxidized to aluminum oxide during fabrication operations such as those that include high temperature such as a heat treatment process. Oxidation of an aluminum conductive layer can make it a poor conductor, particularly if the aluminum layer is thin. Certain aspects pertain to fabricating a protective cap layer, such as a titanium protective cap layer, over the aluminum conductive layer to protect it during fabrication. Using titanium metal as a protective cap layer has the benefit that the titanium oxidized to TiO₂, which generates a DMIL layer while simultaneously protecting the underlying aluminum from oxidation.

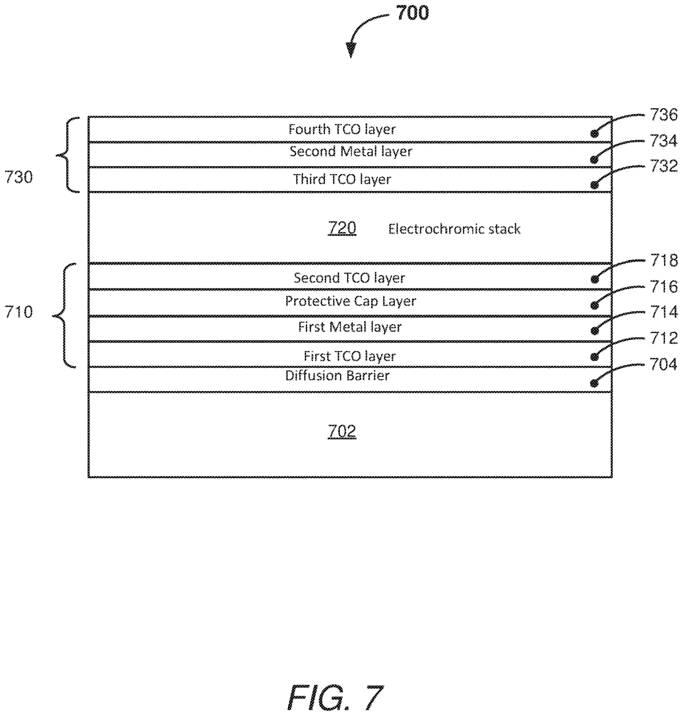

**FIG. 7** depicts a schematic illustration of an electrochromic device **700** including a substrate **702,** one or more diffusion barrier layers **704** disposed on the substrate **702,** a first composite conductor **710** disposed on the diffusion barrier layer(s) **704,** an electrochromic stack **720** disposed on the first composite conductor **710,** and a second composite conductor **730** disposed on the electrochromic stack **720.** The first composite conductor **710** includes a first TCO layer **712** disposed on the one or more diffusion barrier layers **704,** a first metal layer (e.g., silver) **714** disposed on the first TCO layer **712,** a protective cap layer **716** disposed on the first metal layer **714,** and a second TCO layer **718** disposed on the protective cap layer **716.** If the protective cap layer is of material such as titanium that oxidizes to generate a DMIL during a fabrication operation, then a DMIL layer (not shown) may be formed at the interface to the second TCO **718.** The second composite conductor **530** includes a third TCO layer **732** disposed on the electrochromic stack **720,** a second metal layer (e.g., silver) **734** disposed on the third TCO layer **732,** and a fourth TCO layer **736** disposed on the second metal layer **734.**

The first TCO layer **712** is made of any of the materials described above for TCOs and has the associated electrical, physical and optical properties of the TCO materials as described above. In one embodiment, the first TCO layer **712** is a. FTO or other TCO material layer between about 200 nm and 500 nm thick. In another embodiment, the first TCO layer **712** has a thickness in a range between about 20 nm - 50 nm. In one case, the first TCO layer **712** has a thickness of less than about 200 nm. The first metal layer **714** is made of any of the metal materials as described above for metal layers, including alloys, intermetallics, mixtures and/or layers of metals, and having the electrical, physical and optical properties of the metals as described above. In one embodiment, the first metal layer **714** is silver. In one embodiment, the first metal layer **714** has a thickness in the range of between about 1 nm and 5 nm thick. In one embodiment, the first metal layer **714** has a thickness in the range of between about 5 nm and about 30 nm. In one embodiment, the first metal layer **714** has a thickness in the range of between about 10 nm and about 25 nm. In one embodiment, the first metal layer **714** has a thickness in the range of between about 15 nm and about 25 nm. In one embodiment, the first metal layer **714** has a thickness of less than about 20 nm.

The protective cap layer **716** may be made of any of the materials described above for protective cap materials and has the associated electrical, physical and optical properties of the protective cap materials as described above. The second TCO layer **718** is made of any of the materials described above for TCOs and has the associated electrical, physical and optical properties of the TCO materials as described above. In one embodiment, the second TCO layer **718** is a FTO layer or other material layer between about 200 nm and 500 nm thick. In another embodiment, the second TCO layer **718** has a thickness in a range between about 20 nm - 50 nm. In one case, the second TCO layer **718** has a thickness of less than about 200 nm. The third TCO layer **732** is made of any of the materials described above for TCOs and has the associated electrical, physical and optical properties of the TCO materials as described above. In one embodiment, the third TCO layer **732** is a FTO or other TCO material layer between about 200 nm and 500 nm thick. In another embodiment, the third TCO layer **732** has a thickness in a range between about 20 nm - 50 nm. In one case, the third TCO layer **732** has a thickness of less than about 200 nm. The second metal layer **734** is made of any of the metal materials as described above for metal layers, including alloys, intermetallics, mixtures and/or layers of metals, and having the electrical, physical and optical properties of the metals as described above. In one embodiment, the second metal layer **734** is silver. In one embodiment, the second metal layer **734** has a thickness in the range of between about 1 nm and 5 nm thick. In one embodiment, the second metal layer **734** has a thickness in the range of between about 5 nm and about 30 nm. In one embodiment, the second metal layer **734** has a thickness in the range of between about 10 nm and about 25 nm. In one embodiment, the second metal layer **734** has a thickness in the range of between about 15 nm and about 25 nm. In one embodiment, the second metal layer **734** has a thickness of less than about 20 nm.

The fourth TCO layer **736** is made of any of the materials described above for TCOs and has the associated electrical, physical and optical properties of the TCO materials as described above. In one embodiment, the fourth TCO layer **736** is a FTO or other TCO material layer between about 200 nm and 500 nm thick. In another embodiment, the fourth TCO layer **736** has a thickness in a range between about 20 nm - 50 nm. In one case, the fourth TCO layer **736** has a thickness of less than about 200 nm.

In one implementation, the first and second composite conductors **710** and **730** have the same or substantially similar material layers in a mirrored arrangement. That is, the fourth TCO **736** is the same or substantially similar to the first TCO layer **712,** the third TCO layer **732** is the same or substantially similar to the second TCO layer **716,** and the first metal layer **714** is the same or substantially similar to the second metal layer **734.** In other embodiments, the first and second composite conductors **710** and **730** may have different orders of the same layers. In yet other embodiments, the first and second composite conductors **710** and **730** may have one more different material layers. In certain aspects, the first composite conductor **710** and/or the second composite conductor **740** have one or more color tuning layers.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first composite conductor **710** in **FIG. 7****.** In another implementation, the first conductor and the second conductor have the construct of the second composite conductor **730** in **FIG. 7****.** In another implementation, the first conductor has the construct of the second composite conductor **730** in **FIG. 7** and the second conductor have the construct of the first composite conductor **710** in **FIG. 7****.** Alternatively, the order of the layers in each of the conductors in any of these implementations may be reversed.

### Other examples of Multi-layer Lower Conductors

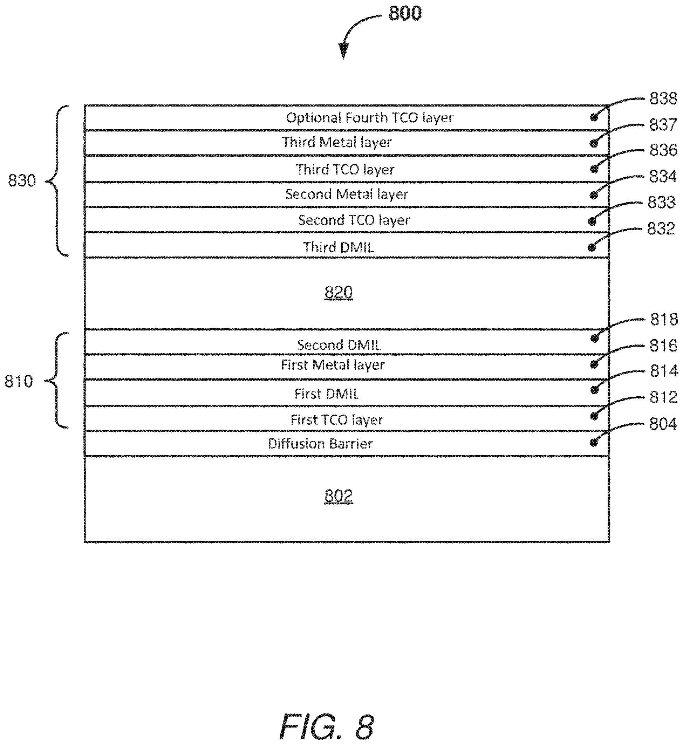

**FIG. 8** is an example used to illustrate various other embodiments of multi-layer conductors. This example is not according to the claimed invention. **FIG. 8** depicts a schematic illustration of the material layers of an electrochromic device **800,** according to embodiments. The electrochromic device **800** includes a substrate **802,** one or more diffusion barrier layers **804** disposed on the substrate **802,** a first composite conductor **810** disposed on the diffusion barrier layer(s) **804,** an electrochromic stack **820** disposed on the first composite conductor **810,** and a second composite conductor **830** disposed on the electrochromic stack **820.** The first composite conductor **810** includes a first TCO layer **812** disposed over the one or more diffusion barrier layers **804,** a first DMIL **814** disposed over the first TCO layer **812,** a first metal layer **816** disposed over the first DMIL **814,** and a second DMIL **818** disposed over the first metal layer **816.** The second composite conductor **830** includes an optional third DMIL **832** shown disposed over the electrochromic stack **820,** a second TCO **833** disposed over the third DMIL **832,** a second metal layer **834** disposed over the second TCO **833,** a third TCO **836** disposed over the second metal layer **834,** an optional third metal layer **837** disposed over the third TCO **836,** and an optional fourth TCO **838** disposed over the third metal layer **837.**

In certain aspects, the first composite conductor **810** of the electrochromic device **800** shown in **FIG. 8** further includes one or more color tuning layers located adjacent one or more of the metal layers. In these color tuning embodiments, the one or more color tuning layers may be selected to increase transparency of the conductor and/or to modify the wavelength of light passing through the electrochromic device to change the color of light transmitted. Some examples of materials that can be used in color tuning layers are silicon oxide, tin oxide, indium tin oxide, and the like.

The first TCO layer **812** is made of any of the materials described above for TCOs and has the associated electrical, physical and optical properties of the TCO materials as described above. In one embodiment, the first TCO layer **812** is a FTO or other TCO material layer between about 200 nm and 500 nm thick. In another embodiment, the first TCO layer **812** has a thickness in a range between about 20 nm - 50 nm. In one case, the first TCO layer **812** has a thickness of less than about 200 nm.

The first DMIL **814** may be made of any of the materials described above for DMILs and has the associated electrical, physical and optical properties of the DMIL materials as described above. In one embodiment, the first DMIL **814** is of TiO₂. In one case, the first DMIL **814** of TiO₂ is between 10 nm and 100 nm thick. In another case, the first DMIL **814** of TiO₂ is between 25 nm and 75 nm thick. In another case, the first DMIL **814** of TiO₂ is between 40 nm and 60 nm thick. In yet another case, the first 13M IL **814** of TiO₂ is about 50 nm thick.

The first metal layer **816** is made of any of the metal materials as described above for metal layers, including alloys, intermetallics, mixtures and/or layers of metals, and having the electrical, physical and optical properties of the metals as described above. In one embodiment, the first metal layer **816** is silver. In one embodiment, the first metal layer **816** has a thickness in the range of between about 1 nm and 5 nm thick. In one embodiment, the first metal layer **816** has a thickness in the range of between about 5 nm and about 30 nm. In one embodiment, the first metal layer **816** has a thickness in the range of between about 10 nm and about 25 nm. In one embodiment, the first metal layer **816** has a thickness in the range of between about 15 nm and about 25 nm. In one embodiment, the first metal layer **816** has a thickness of less than about 20 nm.

A function of the second DMIL **818** is to prevent metal from the first metal layer **816** from migrating and exposure to the electrochromic stack **820.** For example, the electrochromic device **800** may be lithium, proton or other ion based in some cases. Such electrochromic devices undergo oxidation/reduction reactions at their electrode layers. The second DMIL **818** protects the first metal layer **816** from oxidation and reduction reactions, particularly oxidation. The second DMIL **818** can be made of any of the materials described above for DMILs and has the electrical, physical and optical properties of DMILs as described above. In one embodiment, the second DMIL **818** is TiO₂. In one case, the second DMIL **818** of TiO₂ is between 10 nm and 100 nm thick. In another case, the second DMIL **818** of TiO₂ is between 25 nm and 75 nm thick. In another case, the second DMIL **818** of TiO₂ is between 40 nm and 60 nm thick. In yet another case, the second DMIL **818** of TiO₂ is about 50 nm thick.

The third 13M DMIL **832** is an optional layer. The third DMIL **832** may function to prevent the second TCO layer **833** from exposure to the electrochromic stack **820** and/or may function as a traditional DMIL. In one embodiment, the third DMIL **832** is NiWO and is between about 10 nm and about 100. In another embodiment, the third DMIL **832** is NiWO and is between about 10 nm and about 50 nm thick.

The second TCO layer **833** may be made of any of the materials described above for TCOs and has the associated electrical, physical and optical properties of the TCO materials as described above. In one embodiment, the second TCO layer **833** is ITO or other TCO material and is between about 10 nm and about 100 nm thick. In one embodiment, the second TCO layer **833** is ITO or other TCO material and is between about 25 nm and about 75 nm thick. In one embodiment, the second TCO layer **833** is ITO or other TCO material and is about 50 nm thick. In another embodiment, the second TCO layer **833** has a thickness in a range between about 20 nm - 50 nm. In one case, the second TCO layer **833** has a thickness of less than about 200 nm.

The second metal layer **834** is made of any of the metal materials as described above for metal layers, including alloys, intermetallics, mixtures and/or layers of metals, and having the electrical, physical and optical properties of the metals as described above. In one embodiment, the second metal layer **834** is silver. In one embodiment, the second metal layer **834** has a thickness in the range of between about 1 nm and 5 nm thick. In one embodiment, the second metal layer **834** has a thickness in the range of between about 5 nm and about 30 nm. In one embodiment, the second metal layer **834** has a thickness in the range of between about 10 nm and about 25 nm. In one embodiment, the second metal layer **834** has a thickness in the range of between about 15 nm and about 25 nm. In one embodiment, the second metal layer **835** has a thickness of less than about 20 nm.

The third TCO layer **836** may be made of any of the materials described above for TCOs and has the associated electrical, physical and optical properties of the TCO materials as described above. In one embodiment, the third TCO layer **836** is ITO or other TCO material and is between about 50 nm and about 500 nm thick. In one embodiment, the third TCO layer **836** is ITO or other TCO material and is between about 100 nm and about 500 nm thick. In one embodiment, the third TCO layer **836** is ITO or other TCO material and is between about 100 nm thick and about 250 nm thick. In another embodiment, the third TCO layer **836** has a thickness in a range between about 20 nm - 50 nm. In one case, the third TCO layer **836** has a thickness of less than about 200 nm.

The third metal layer **837** is optional. If this third metal layer **837** is included, then the optional fourth TCO layer 838 is also included. The third metal layer **837** is made of any of the metal materials as described above for metal layers, including alloys, intermetallics, mixtures and/or layers of metals, and having the electrical, physical and optical properties of the metals as described above. In one embodiment, the third metal layer **837** is silver. In one embodiment, the third metal layer **837** has a thickness in the range of between about 1 nm and 5 nm thick. In one embodiment, the third metal layer **837** has a thickness in the range of between about 5 nm and about 30 nm. In one embodiment, the third metal layer **837** has a thickness in the range of between about 10 nm and about 25 nm. In one embodiment, the third metal layer **837** has a thickness in the range of between about 15 nm and about 25 nm. In one embodiment, the third metal layer **837** has a thickness of less than about 20 nm.

The fourth TCO layer **838** is optional. If the fourth TCO layer **838** is included, then the third metal layer **837** is also included. The fourth TCO layer **838** may be made of any of the materials described above for TCOs and has the associated electrical, physical and optical properties of the TCO materials as described above. In one embodiment, the fourth TCO layer **838** is ITO and is between about 50 nm and about 500 nm thick. In one embodiment, the fourth TCO layer **838** is ITO or other TCO material layer that is between about 100 nm and about 500 nm thick. In one embodiment, the fourth TCO layer **838** is ITO other TCO material layer that is between about 100 nm thick and about 250 nm thick. In another embodiment, the fourth TCO layer **838** has a thickness in a range between about 20 nm - 50 nm. In one case, the fourth TCO layer **838** has a thickness of less than about 200 nm.

In some implementations, an electrochromic device includes one or more diffusion barrier layers disposed on a substrate, a first conductor disposed over the one or more diffusion barrier layers, an electrochromic stack disposed on the first conductor, and a second conductor disposed on the electrochromic stack. In one implementation, the first conductor and the second conductor have the construct of the first conductor **810** in **FIG. 8****.** In another implementation, the first conductor and the second conductor have the construct of the second composite conductor **830** in **FIG. 8****.** In another implementation, the first conductor has the construct of the second conductor **830** in **FIG. 8** and the second conductor has the construct of the first conductor **810** in **FIG. 8****.** Alternatively, the order of the layers in each of the conductors in any of these implementations may be reversed.

In certain aspects, an electrochromic device includes two conductors, at least one of which is a multi-layer conductor, and an electrochromic stack between the conductors, disposed on a substrate (e.g., glass). Each multi-layer conductor includes a metal layer sandwiched between at least two non-metal layers such as, for example, a metal oxide layer, a transparent conductive oxide (TCO) layer and/or a DMIL. That is, a metal layer is not in direct contact with the electrochromic stack. In some cases, one or both of the conductors further comprise one or more additional metal layers. In these aspects, the additional metal layers are also sandwiched between layers and not in contact with the electrochromic stack. In some aspects, the one or more metal layers of a multi-layer conductor are not in contact with a TCO layer. For example, a metal layer of a multi-layer conductor may be sandwiched between two DMILs.

In certain aspects, a multi-layer conductor may comprise a metal layer sandwiched between a DMIL and a non-metal layer. In some cases, the sandwiched metal layer may comprise of one of silver, gold, copper, platinum, and alloys thereof. In some cases, the metal layer may be comprised of an alloy whose oxides have low resistivity. In one example, the metal layer may further comprise another material (e.g., Hg, Ge, Sn, Pb, As, Sb, or Bi) as compound during the preparation of the oxide to increase density and/or lower resistivity.

### Layers of Multi-layer Lower Conductors with multiple functions

In certain embodiments, one or more of the layers of materials described herein can serve multiple functions. For example, in one embodiment, a layer disposed on the substrate function both as a diffusion barrier and an opposite susceptibility layer. Also, a layer can function both as a DMIL layer and as an opposite susceptibility layer.

### Electromagnetic-shielding

In certain embodiments, not according to the claimed invention, a faster-switching electrochromic window with one or more electrochromic devices described herein is configured to provide electromagnetic shielding by blocking electromagnetic communication signals. Each of these electromagnetic-shielding, electrochromic windows has a shielding stack of one or more material layers that functions to block the electromagnetic communication signals. In certain aspects, the shielding stack and the electrochromic device share certain layers of a single multi-functional stack of material layers. For example, an electrochromic device may include a composite conductor with material layers that can function as a shielding stack. In other aspects, the layers of the electrochromic device and the shielding stack are separate structures on the same substrate, separate structures on different substrates (e.g., different substrates of an IGU), or separate structures on different surfaces of the same substrate.

One embodiment is an electrochromic device having one or more layers that function as an electromagnetic shield. In one embodiment, the electromagnetic shielding function is active, i.e. it can be turned on and off with a grounding function, e.g. by a controller. In one embodiment the electromagnetic shielding function is passive, i.e. always on. This may be because the layers inherently possess a shielding function by design, i.e. they do not rely on a grounding function, or e.g. because a layer or layers is permanently grounded. One embodiment is an electrochromic device stack and electromagnetic shield combination, whether the electromagnetic shield is part of the electrochromic device stack or a separate device.

These electromagnetic-shielding, electrochromic windows can be used to prevent electromagnetic interference (EMI), allowing for sensitive electromagnetic transmissions to be observed in the shielded space, or to block wireless communication and create private spaces in which outside devices are prevented from eavesdropping on wireless transmissions originating from within the space. Electrochromic windows configured to provide electromagnetic shielding for a structure or building, can effectively turn a building, room, or other space into a Faraday cage, provided the surrounding structure itself attenuates electromagnetic signals (e.g., the surrounding structure is made from conductive materials such as steel or aluminum or is properly grounded so as to block as a Faraday cage would otherwise). Electrochromic windows configured for electromagnetic shielding may be characterized as sufficiently attenuating electromagnetic transmissions across a range of frequencies, for example, between 20 MHz and 10,000 MHz. Some applications may allow more limited or selective attenuation. For example, depending on the structure of the shielding feature, one or more subranges may be excluded from attenuation. For example, in some embodiments, electromagnetic radiation may be attenuated by about 10dB to 70dB over selected ranges or about 20dB to 50dB over selected ranges.

Electromagnetic-shielding, electrochromic windows can be placed in a room of other region of a building that requires security to prevent wireless electromagnetic communications from entering or exiting the region. A window controller can be used to activate and deactivate the shielding features in the secure region according to a schedule or as triggered by an event such as the entry of particular individual or asset into the secure region or into the vicinity of the secure region. The window controller may issue the instructions over a window communications network or locally, for example, from a local onboard controller at the window. In one aspect, the shielding stack has at least one metal layer, for example, as part of a multi-layer conductor of an electrochromic device. To activate the shielding feature, the metal layer of the shielding stack may be grounded to effectively block communications. In one aspect, the same window controller that controls the transition of the electrochromic device(s) to different tint states also controls the shielding features of the window ("active" shielding). In one example, the shielding stack is selectively controlled to shield or not with a grounding function. The grounding function may be controlled by the window controller that also controls transitioning of the electrochromic device to different tint states. In other embodiments, the shielding function may be inherent in the structure of the shielding stack, i.e. a grounding function need not be applied in order to effect a shielding function (referred to as "passive" shielding).

The shielding stack of an electromagnetic-shielding, electrochromic window is designed to attenuate transmission of electromagnetic radiation in frequencies used for wireless communication while transmitting most radiation in the visible spectrum. The shielding generally includes one or more layers of electrically conductive material (i.e. one or more electroconductive layers) that span the area where transmission of electromagnetic radiation is to be blocked. For example, the one or more electroconductive layers may be coextensive with the surface area (or visible area between the window frames) of the transparent substrate upon which it is disposed in order to provide attenuation of the electromagnetic radiation. In some cases, the attenuating effect of the window can be increased when the one or more electroconductive layers are grounded or held at a particular voltage to provide attenuation of electromagnetic radiation. In some cases, the one or more electroconductive layers are not connected to ground or an external circuit and have a floating potential. Electromagnetic shielding for other window applications has previously been described in, for example, U.S. Patent No. 5,139,850 and U.S. Patent No. 5,147,694.

In one aspect, an electromagnetic-shielding, electrochromic window is configured to selectively block certain wavelengths of electromagnetic communication, thus acting as high, low, or bandpass filters. In other words, the shielding stack can be configured to block transmission and/or reception of communications in certain frequency ranges but allow communications in other frequency ranges, which may be deemed sufficiently secure in some contexts. For example, it may be possible to allow communication that is transmitted at 800 MHz, while blocking Wi-Fi communication.

The electroconductive layer can be made of any of a number of conductive materials such as silver, copper, gold, nickel, aluminum, chromium, platinum, and mixtures, intermetallics and alloys thereof. In some cases, the electroconductive layer may be comprised of multiple layers of the same or different conductive materials. For example, an electroconductive layer of a shielding stack may be of a "metal sandwich" construction of two or more different metal sublayers (e.g., Cu/Ag/Cu or NiCr/metal/NiCr where the metal sublayer is one of the aforementioned metals).

In one aspect, a shielding stack includes one or more silver electroconductive layers that have a floating electric potential, where each silver layer has a thickness of about 10 nm - 20 nm. The shielding stack also includes one or more anti-reflection layers made of indium tin oxide. The anti-reflection layers have a thickness of about 30 nm to 40 nm when adjacent to one silver electroconductive layer and a thickness of about 75 nm - 85 nm when interposed between two silver electroconductive layers.

In some cases, the one or more electroconductive layers of a shielding stack are made of an opaque or reflective material (e.g., metal layers) in its bulk form. For example, the one or more electroconductive layers of a shielding stack may be the one or more metal layers of a composite conductor (e.g., **310, 330, 410, 430, 510, 530, 560, 580**) of an electrochromic device (e.g. **300, 400, 500, 550,** etc.). In one aspect, the shielding stack may be designed to minimize attenuation of visible radiation while still strongly attenuating radiation at longer wavelengths commonly used in wireless communication according to one aspect. One way to minimize attenuation of visible radiation is to include at least one anti-reflection layer disposed adjacent to each electroconductive layer (e.g., metal layer). In some cases, anti-reflection layers are placed on either side of an electroconductive layer to enhance light transmission through coated substrate having the shielding stack. An anti-reflection layer typically has a refractive index that differs from the adjacent electroconductive layer. Typically, anti-reflection layers are a dielectric or metal oxide material. Examples of anti-reflection layers include indium tin oxide (ITO), In₂O₃, TiO₂, Nb₂O₅, Ta₂O₅, SnO₂, ZnO or Bi₂O₃. In certain embodiments, an anti-reflection layer is a tin oxide layer having a thickness in the range of between about 15 to 80 nm, or between about 30 to 50 nm. In general, the thickness of the anti-reflection layer is dependent on the thickness of the conductive layer.

According to one aspect, a shielding stack includes at least one electroconductive layer (e.g. metal layer) and at least one anti-reflection layer adjacent each electroconductive layer. The anti-reflection layer may be, for example, a layer of material of "opposing susceptibility" such as a "color tuning" layer, a TCO layer, a DMIL layer, or other anti-reflection layer. With reference to **FIG. 4****,** for example, the first composite conductor **410** of the electrochromic device **400** includes a stack of a metal layer (e.g., silver) **412** disposed between one or more color tuning layers **411** and a first DMIL (e.g., TiO₂) **424,** which can function as a shielding stack comprised of a metal layer sandwiched between anti-reflection layers. As another example, the first composite conductor **510** of the electrochromic device **500** in **FIG. 5** includes a stack of a metal layer **514** between the first TCO layer **512** and the second TCO layer **516** and DMIL **504,** which can function as a shielding stack comprised of a metal layer sandwiched between anti-reflection layers. The second conductor **530** of the electrochromic device **500** in **FIG. 5** has a stack of a metal layer **534** between the third TCO layer **532** and the fourth TCO layer **536,** which can also function as a shielding stack comprised of a metal layer sandwiched between anti-reflection layers. Other examples can be found in other illustrated examples and elsewhere in the disclosure.

According to another aspect, a shielding stack includes two or more separate electroconductive layers (e.g. metal layers), along with an interlayer or anti-reflection layer between the electroconductive layers. An illustrated example of an electrochromic device that includes a shielding stack according to this construction is shown in **FIG. 4****.** As shown, the electrochromic device **400** includes a first metal layer **412,** a second metal layer **433,** and if DMILs **424, 432** are made of TiO₂, they function as anti-reflections layers between the metal layers. Additional examples can be found in other illustrated embodiments and elsewhere in the disclosure. An interlayer may be made from materials that are transparent to short wave electromagnetic radiation in the visible spectrum while absorbing frequencies having longer wavelengths that are used for communication. An interlayer may be a single layer or a composite of several material layers. If an electrochromic window is of a laminate construction, a resin such as polyvinylbutyral ("PVB") or polyurethane may be used as an interlayer to laminate two transparent substrates together. In one example when a resin such as PVB is used, the thickness of the interlayer is in the range of about 0.25 mm to 1.5 mm.

According to another aspect, a shielding stack may comprise two or more electroconductive layers, where each electroconductive layer is sandwiched by an anti-refection layer. An illustrated example of an electrochromic device that includes a shielding stack according to this construction is shown in **FIG. 5B****.** As shown, the electrochromic device **550** includes a first metal layer **564,** a second metal layer **584,** and TCOs that sandwich each of the metal layers. Additional examples can be found in other illustrated embodiments and elsewhere in the disclosure. In another aspect, four or more electroconductive layers may be used in a single shielding stack.

When a shielding stack having a single electroconductive layer is used in combination with a semiconductor metal oxide layer, or when a shielding stack having two electroconductive layers is used, the spacing between the electroconductive layers required to achieve a particular attenuation effect may depend on the composition (e.g., glass, air, gas, or EC device layers) and thickness of the layers that lie between the two electroconductive layers.

In one embodiment, a shielding stack includes a single layer of silver (or other conductive material) with a thickness in the range of about 15 nm to 60 nm. A thickness greater than about 15 nm of silver provides a low sheet resistance of less than 5 ohms per square. In one example, a single electroconductive silver layer will be between about 20 and 30 nm thick and thus allow sufficient absorption of electromagnetic radiation in communications frequencies while maintaining a sufficiently high light transmissivity. In this case, the silver layer may be electrically coupled to ground either by physical connection (e.g., a bus bar), or by capacitive coupling between the electroconductive layer and a metal frame that at least partially overlaps the electroconductive layer.

In one aspect, a shielding stack includes two layers of silver or other electroconductive material, each having a thickness in a range of about 7 nm to about 30 nm. A shielding stack with two layers of electroconductive material has been found to have a reduced light reflection for a given attenuation as compared to when a single, but thicker, silver layer is used. In one case, one of the electroconductive layers (first) is electrically coupled to ground either by physical connection (e.g., a bus bar), or by capacitive coupling between the electroconductive layer and a grounded metal frame that at least partially overlaps the electroconductive layer. The other (second) electroconductive layer may be capacitively coupled to the first grounded electroconductive layer, thus connecting the second electroconductive layer to ground. In another case, both the first and second electroconductive layers are physically connected to ground. In another case, one or both of the electroconductive layers have floating potentials (i.e., they are not electrically connected to ground or a source of defined potential). In the embodiments according to this aspect, most attenuation can be attributed to the reflection of electromagnetic radiation at the first electroconductive layer. Further attenuation occurs as a result of absorption in the interlayer region between the electroconductive layers (or their proximate antireflective layers) as the path length of incoming waves is greatly increased due reflections between the electroconductive layers, resulting in significant absorption of radiation reflecting within the interlayer.

In yet another embodiment, the outer surface of an electromagnetic-shielding, electrochromic window is coated with a transparent abrasion-resistant coating including an electroconductive semiconductor metal oxide layer, which may serve the purpose of a shielding stack or a portion thereof. In this embodiment, the lite also includes a shielding stack having a single layer of silver (or other conductive material) with a thickness of, e.g., between about 15 and 50 nm placed on one of the interior surfaces of the glass (e.g., S3 or S4), such as a surface not having an electrochromic stack. Optionally, an interlayer may be placed at any location between the metal oxide layer and the shielding stack to increase absorption of waves reflecting between the two electroconductive layers. In some instances the metal oxide layer and the shielding stack are placed on opposite lites of an IGU such that there is a gap between the metal oxide layer and the shielding stack. As examples, abrasion resistant coatings may be made from metal oxides such as tin doped indium oxide, doped tin oxide, antimony oxide, and the like. In this embodiment, the electroconductive layer and the abrasion resistant coating are electrically coupled to ground, either by physical connection (e.g., a bus bar), or by, e.g., capacitive coupling between the electroconductive layer and a metal frame that at least partially overlaps the layer.

In yet another embodiment, a shielding stack is incorporated into a flexible shielding film, which may be adhered to or otherwise mounted to a substrate. For example, an IGU may be configured for electromagnetic shielding by attaching a flexible shielding film to surface S 1 or S4 of an IGU lite after the IGU is fabricated. Alternatively, during assembly of an IGU, the flexible shielding film may be attached to surface S2 or S3 of an IGU lite. As another example, a flexible shielding film may be embedded in the laminate during fabrication. In yet another example, an IGU can be constructed so that S2 has an electrochromic device, and the mate lite for the IGU is a laminate having a shielding film laminated between two substrates.

Flexible shielding films may be configured to block one or more of radio frequency (RF), infrared (IR) and ultraviolet (UV) signals. Some examples of flexible films such as SD2500 / SD25 10, SD 1000 / SD 1010 and DAS Shield^{™} films, sold by Signals Defense, of Owings Mills, Maryland are commercially available.

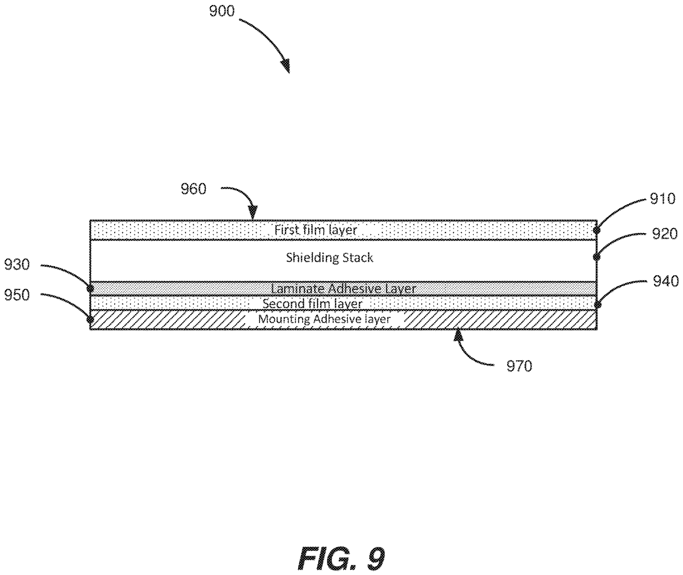

**FIG. 9** depicts a flexible electromagnetic shielding film **900** that may be mounted onto the surface of a substrate (without or without an electrochromic device) to provide electromagnetic shielding. A first film layer **910** is used as a substrate onto which a shielding stack **920** is deposited or formed. A laminate adhesive layer **930** is used to bond the shielding stack **920** to a second film layer **940,** encapsulating the shielding stack **920** within a flexible film. A mounting adhesive layer **950** may also be included in the flexible electromagnetic shielding film **900** as shown in **FIG. 9****.** The mounting adhesive layer **950** can then be used to bond the other layers of the shielding film **900** to the surface of the substrate of the window to provide electromagnetic shielding. In some cases, the total thickness of the flexible electromagnetic shielding film, when mounted on a lite, is between about 25 µm and 1000 µm. Optionally, an additional protective layer (not shown) may be located on the surface **960.** The type of material that can be used for a protective layer varies depending on the window environment. Some examples of materials that can be used include materials such as epoxy, resin, or any natural or synthetic material that provides adequate protection to the shielding film structure. While a flexible electromagnetic shielding film is being transported, stored, or otherwise held prior to installation on a lite, optionally a release film layer may be located on the surface **970.** The release film layer may protect the mounting adhesive layer **950** until the time of installation when the release film is removed.

In another embodiment, a flexible electromagnetic shielding film includes a substrate onto which a shielding stack is deposited or formed, and a mounting adhesive layer that bonds the shielding stack directly to the surface of the window substrate. This embodiment omits the laminate layer **930** and the second film layer **940** shown in **FIG. 9****.** Many materials may be suitable for film layers **910** and **940,** for laminate adhesive layer **930,** and for mounting adhesive layer **950.** Typically materials chosen should be transparent to visible light and have sufficiently low haze so the optical properties of a lite are not substantially diminished. In certain embodiments, film layers are less than about 300 µm thick (e.g., between about 10 µm and 275 µm thick) and are made from a thermoplastic polymer resin. Examples of film materials include polyethylene terephthalate, polycarbonate, polyethylene naphthalate. One of skill in the art may select from a variety of acceptable adhesive layers and mounting adhesive layers. Depending on the thickness of a shielding stack, the placement of the film within an IGU unit, or the optical properties desired from a window configured for electromagnetic shielding, different adhesives may be used. In one example, the mounting adhesive layer **950** may be made from a pressure sensitive adhesive such as National Starch 80-1057 available from Ingredion Inc. Examples of other suitable adhesives include Adcote 76R36 with catalyst 9H1H, available from Rohm & Haas and Adcote 89r3 available from Rohm & Haas.

Layers described for electromagnetic shielding and/or the electrochromic device may be fabricated using a variety of deposition processes including those used for fabricating electrochromic devices. In some instances, the steps used for depositing a shielding stack may be integrated into the fabrication process steps for depositing an electrochromic device. In general, a shielding stack or an abrasion-resistant coating that is a semiconductor metal oxide may be deposited by physical and/or chemical vapor techniques onto a transparent substrate at any step in the fabrication process. Individual layers of a shielding stack are often well suited for being deposited by a physical vapor deposition technique such sputtering. In some cases, a silver (or other metal) layer is deposited by a technique such as cold spraying or even a liquid based process such as coating with a metal ink. In cases where a resin material such as PVB is used, the interlayer may be formed through a lamination process in which two substrates (optionally having one or more layers thereon) are joined together.

In some aspects, the shielding stack is disposed on one substrate and the electrochromic device is disposed on another substrate of an IGU, a laminate construction, or combination thereof. In one example, a laminate lite of an IGU includes the shielding stack, while a non-laminate lite of the IGU includes an electrochromic device. In another embodiment, both lites of the IGU are laminates, where one laminate lite includes a shielding stack and the other laminate lite includes an electrochromic device. In yet other embodiments, a single laminate includes both an electrochromic device coating and a shielding stack. The laminate may itself be a lite of an IGU or not.

Although the foregoing embodiments have been described in some detail to facilitate understanding, the described embodiments are to be considered illustrative and not limiting. It will be apparent to one of ordinary skill in the art that certain changes and modifications can be practiced within the scope of the the appended claims.

## Claims

1. An electrochromic device, comprising:
a substrate (1202);
a first conductor (1210), wherein the first conductor is a single first transparent conductive oxide layer (1212);
a second conductor(1230) comprising a metal layer (1234) sandwiched between a second transparent conductive oxide layer (1232) and a third transparent conductive oxide layer (1242); and
a solid state and inorganic electrochromic stack (1220) between the first and second conductors; **characterized in that** the electrochromic device further comprises a diffusion barrier (1211) disposed on the substrate, wherein the first conductor is disposed on the diffusion barrier and
wherein a first sheet resistance of the first conductor and a second sheet resistance of the second conductor vary from each other by (i) less than 20 %, (ii) less than 10 %, or (iii) less than 5%.

2. The electrochromic device of claim 1, wherein the first sheet resistance is about 7 Ohms/sq.

3. The electrochromic device of claim 1, wherein the diffusion barrier is a sodium diffusion barrier.

4. The electrochromic device of claim 1, wherein the diffusion barrier includes a tri-layer stack comprising a SiO₂ layer, a SnO₂ layer, and a SiOₓ layer.

5. The electrochromic device of claim 4, wherein the SiO₂ layer has a thickness of between 20 nm and 30 nm, the SnO₂ layer has a thickness of between 20 nm and 30 nm, and the SiOₓ layer has a thickness of between 2 nm and 10 nm.

6. The electrochromic device of claim 1, further comprising one or more color tuning layers adjacent the metal layer.

7. The electrochromic device of claim 6, wherein the metal layer is transparent by virtue of being adjacent to the one or more color tuning layers.

8. The electrochromic device of claim 1, wherein the single first transparent conductive oxide layer has a thickness of less than 200 nm.

9. The electrochromic device of claim 1, wherein the single first transparent conductive oxide layer and has a thickness between 20 nm and 50 nm.

10. The electrochromic device of claim 9, wherein the metal layer has a thickness of less than 20 nm.

11. The electrochromic device of claim 1, wherein the diffusion barrier has a thickness of less than 100 nm.

12. The electrochromic device of claim 1, wherein the single first transparent conductive oxide layer is a polished material layer.

13. The electrochromic device of claim 12, wherein the polished material layer is a polished metal oxide material layer.

## Patentansprüche

1. Elektrochrome Vorrichtung, umfassend:
ein Substrat (1202);
einen ersten Leiter (1210), wobei der erste Leiter eine einzelne erste transparente leitfähige Oxidschicht (1212) ist;
einen zweiten Leiter (1230), umfassend eine Metallschicht (1234), die zwischen einer zweiten transparenten leitfähigen Oxidschicht (1232) und einer dritten transparenten leitfähigen Oxidschicht (1242) sandwichartig angeordnet ist; und
einen Festzustand- und anorganischen elektrochromen Stapel (1220) zwischen dem ersten und dem zweiten Leiter; **dadurch gekennzeichnet, dass** die elektrochrome Vorrichtung ferner eine Diffusionsbarriere (1211) umfasst, die auf dem Substrat angeordnet ist, wobei der erste Leiter auf der Diffusionsbarriere angeordnet ist und
wobei ein erster Flächenwiderstand des ersten Leiters und ein zweiter Flächenwiderstand des zweiten Leiters um (i) weniger als 20 %, (ii) weniger als 10 % oder (iii) weniger als 5 % voneinander abweichen.

2. Elektrochrome Vorrichtung nach Anspruch 1, wobei der erste Flächenwiderstand etwa 7 Ohm/Quadrat beträgt.

3. Elektrochrome Vorrichtung nach Anspruch 1, wobei die Diffusionsbarriere eine Natriumdiffusionsbarriere ist.

4. Elektrochrome Vorrichtung nach Anspruch 1, wobei die Diffusionsbarriere einen dreischichtigen Stapel einschließt, umfassend eine SiO₂-Schicht, eine SnO₂-Schicht und eine SiO_{X}-Schicht.

5. Elektrochrome Vorrichtung nach Anspruch 4, wobei die SiO₂-Schicht eine Dicke zwischen 20 nm und 30 nm aufweist, die SnO₂-Schicht eine Dicke zwischen 20 nm und 30 nm aufweist, und die SiO_{X}-Schicht eine Dicke zwischen 2 nm und 10 nm aufweist.

6. Elektrochrome Vorrichtung nach Anspruch 1, ferner umfassend eine oder mehrere Farbabstimmungsschichten angrenzend an die Metallschicht.

7. Elektrochrome Vorrichtung nach Anspruch 6, wobei die Metallschicht aufgrund ihrer Angrenzung an die eine oder die mehreren Farbabstimmungsschichten transparent ist.

8. Elektrochrome Vorrichtung nach Anspruch 1, wobei die einzelne erste transparente leitfähige Oxidschicht eine Dicke von weniger als 200 nm aufweist.

9. Elektrochrome Vorrichtung nach Anspruch 1, wobei die einzelne erste transparente leitfähige Oxidschicht eine Dicke zwischen 20 nm und 50 nm aufweist.

10. Elektrochrome Vorrichtung nach Anspruch 9, wobei die Metallschicht eine Dicke von weniger als 20 nm aufweist.

11. Elektrochrome Vorrichtung nach Anspruch 1, wobei die Diffusionsbarriere eine Dicke von weniger als 100 nm aufweist.

12. Elektrochrome Vorrichtung nach Anspruch 1, wobei die einzelne erste transparente leitfähige Oxidschicht eine polierte Materialschicht ist.

13. Elektrochrome Vorrichtung nach Anspruch 12, wobei die polierte Materialschicht eine polierte Metalloxidmaterialschicht ist.

## Revendications

1. Dispositif électrochromique, comprenant :
un substrat (1202) ;
un premier conducteur (1210), dans lequel le premier conducteur est une unique première couche d'oxyde conductrice transparente (1212) ;
un second conducteur (1230) comprenant une couche de métal (1234) placée en sandwich entre une deuxième couche d'oxyde conductrice transparente (1232) et une troisième couche d'oxyde conductrice transparente (1242) ; et
un empilement électrochromique à semi-conducteurs et inorganique (1220) entre les premier et second conducteurs ; **caractérisé en ce que** le dispositif électrochromique comprend en outre une barrière de diffusion (1211) disposée sur le substrat, dans lequel le premier conducteur est disposé sur la barrière de diffusion et
dans lequel une première résistance de feuille du premier conducteur et une seconde résistance de feuille du second conducteur varient l'une par rapport à l'autre de (i) moins de 20 %, (ii) moins de 10 %, ou (iii) moins de 5 %.

2. Dispositif électrochromique selon la revendication 1, dans lequel la première résistance de feuille est environ 7 ohms/carré.

3. Dispositif électrochromique selon la revendication 1, dans lequel la barrière de diffusion est une barrière de diffusion de sodium.

4. Dispositif électrochromique selon la revendication 1, dans lequel la barrière de diffusion comporte un empilement à trois couches comprenant une couche de SiO₂, une couche de SnO₂ et une couche de SiOₓ.

5. Dispositif électrochromique selon la revendication 4, dans lequel la couche de SiO₂ a une épaisseur comprise entre 20 nm et 30 nm, la couche de SnO₂ a une épaisseur comprise entre 20 nm et 30 nm, et la couche de SiOₓ a une épaisseur comprise entre 2 nm et 10 nm.

6. Dispositif électrochromique selon la revendication 1, comprenant en outre une ou plusieurs couches de réglage de couleur adjacentes à la couche de métal.

7. Dispositif électrochromique selon la revendication 6, dans lequel la couche de métal est transparente grâce au fait qu'elle est adjacente à la ou aux couches de réglage de couleur.

8. Dispositif électrochromique selon la revendication 1, dans lequel l'unique première couche d'oxyde conductrice transparente a une épaisseur inférieure à 200 nm.

9. Dispositif électrochromique selon la revendication 1, dans lequel l'unique première couche d'oxyde conductrice transparente a une épaisseur entre 20 nm et 50 nm.

10. Dispositif électrochromique selon la revendication 9, dans lequel la couche de métal a une épaisseur inférieure à 20 nm.

11. Dispositif électrochromique selon la revendication 1, dans lequel la barrière de diffusion a une épaisseur inférieure à 100 nm.

12. Dispositif électrochromique selon la revendication 1, dans lequel l'unique première couche d'oxyde conductrice transparente est une couche de matériau polie.

13. Dispositif électrochromique selon la revendication 12, dans lequel la couche de matériau polie est une couche de matériau d'oxyde métallique polie.
